(19) Europäisches Patentamt
European Patent Office
Office européen des brevets

(11) **EP 1 936 619 B1**

(12) # EUROPEAN PATENT SPECIFICATION

(45) Date of publication and mention
of the grant of the patent:
**04.12.2013 Bulletin 2013/49**

(51) Int Cl.:
***G11B 7/1353*** *(2012.01)*    ***G11B 7/127*** *(2012.01)*
***G11B 7/14*** *(2012.01)*

(21) Application number: **07254924.9**

(22) Date of filing: **18.12.2007**

(54) **Light source unit, optical head, optical driver, and information processing apparatus**

Lichtquelleneinheit, optischer Kopf, optischer Treiber und Informationsverarbeitungsvorrichtung

Unité de source lumineuse, tête optique, lecteur optique, et appareil de traitement d'informations

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **21.12.2006 JP 2006344391**

(43) Date of publication of application:
**25.06.2008 Bulletin 2008/26**

(73) Proprietor: **Ricoh Company, Ltd.
Tokyo 143-8555 (JP)**

(72) Inventors:
• **Oouchida, Shigeru,**
c/o Ricoh Company Ltd.
**Tokyo 143-8555 (JP)**
• **Kitabayashi, Junichi,**
c/o Ricoh Company Ltd.
**Tokyo 143-8555 (JP)**

(74) Representative: **Lamb, Martin John Carstairs
Marks & Clerk LLP
90 Long Acre
London
WC2E 9RA (GB)**

(56) References cited:
WO-A-2007/058389    WO-A1-2006/092745
JP-A- 4 243 024    US-A- 5 331 445
US-A- 6 043 911    US-A1- 2002 009 040
US-A1- 2003 214 898    US-A1- 2004 213 109
US-A1- 2005 088 948    US-A1- 2006 164 952

• YOSHIMASA KAWATA ET AL: "Three-dimensional optical data storage using three-dimensional optics", OPTICAL ENGINEERING, SOC. OF PHOTO-OPTICAL INSTRUMENTATION ENGINEERS, BELLINGHAM, vol. 40, no. 10, 1 October 2001 (2001-10-01), pages 2247-2254, XP007906109, ISSN: 0091-3286, DOI: 10.1117/1.1402123

**Description**

BACKGROUND OF THE INVENTION

Field of the Invention

Exemplary aspects of the present invention relate to a light source unit, an optical detection unit, an optical head, an optical driver, and an information processing apparatus, and more particularly, to a light source unit, an optical detection unit, an optical head, an optical driver, and an information processing apparatus for stably emitting a plurality of light beams irrespective of wavelength fluctuation.

Description of the Related Art

Advancement of digital and data compression technologies enables an optical disk, such as CD (compact disc) and DVD (digital versatile disc), to record information (e.g., contents) including music, movie, photo, and computer software. An optical disk device for recording information to the optical disk is provided at a lower price and thereby becomes widespread. The optical disk device may be included in an information processing apparatus.

The optical disk device records information by forming micro spots with a laser beam into a recording layer of the optical disk in which spiral or concentric tracks are formed. The optical disk device plays back information from the optical disk based on a reflection light beam reflected by the recording layer of the optical disk. The optical disk device includes an optical pickup device for emitting the laser beam to the optical disk and receiving the reflection light beam.

The optical disk is requested to record a greater amount of information. To increase a recording capacity of the optical disk, a three-dimensional multilayer optical disk, in which several tens of recording layers are formed, is developed. The three-dimensional multilayer optical disk includes a fluorescent material and a two-photon absorption material as a recording material, so as to improve transmittance and crosstalk between layers. However, one drawback of the three-dimensional multilayer optical disk is that it may provide a decreased speed for recording and playback of information.

One example of a related art optical disk device records and plays back information to and from a multilayer recording medium in which a plurality of recording layers is layered via an intermediate layer. In this optical disk device, a plurality of light sources disposed on a common plane emits light beams having a common wavelength. An objective lens gathers the light beams emitted by the light sources. An optical path length converter disposed between the light sources and the objective lens converts an optical path length, so that the light beams are focused on the corresponding recording layers, respectively.

The light sources disposed on the common plane cause a lens to generate wavefront aberration (e.g., coma aberration) to a luminous flux emitted by the light sources and traveling outside an optical axis of the lens. Therefore, diffraction-limited light spots may not be easily formed in the recording layers. Further, a luminous flux is output from a collimating lens at a certain angle. Accordingly, an amount of light entering the objective lens may vary depending on the light sources, resulting in an inefficient use of light.

Another example of a related art optical disk device gathers luminous fluxes emitted by a plurality of light sources into different recording layers of a multilayer optical recording medium, respectively, by using an objective lens and a multi-exposure volume hologram.

The more the volume hologram is multi-exposed, the smaller the diffraction efficiency becomes. Therefore, when the number of light spots is increased, the optical recording medium may provide a decreased surface power. Further, when the plurality of light sources is disposed on a plane perpendicular to an optical axis of a collimating lens, a luminous flux is output from the collimating lens at a certain angle. Accordingly, an amount of light entering the objective lens and a light amount distribution may vary depending on the light sources, resulting in an inefficient use of light and asymmetric light spots. In this optical disk device, a single volume hologram is multi-exposed. Therefore, when a plurality of luminous points is formed at varied positions, the single volume hologram may not adjust the positions individually. As a result, the varied positions of the luminous points may cause varied light-gathering points.

By way of example, an optical disk device is known from US 2006/0164952.

WO 2006/092745, US 6,043,911 and US 2002/009040A disclose optical pickups using plane and volume hologram elements. The document XP007906109 discloses the use of a volume holographic device in a bit-oriented three-dimensional optical memory, said volume holographic device having high angular selectivity so as to focus the light from different points to different layers in said optical memory.

The present invention is in the light source unit of Claim 1.

## BRIEF DESCRIPTION OF THE DRAWINGS

A more complete appreciation of the invention and the many attendant advantages thereof will be readily obtained as the same becomes better understood by reference to the following detailed description when considered in connection with the accompanying drawings, wherein:

FIG. 1 is a block diagram of an information processing apparatus according to an exemplary embodiment of the present invention;

FIG. 2 is a block diagram of an optical disk device included in the information processing apparatus shown in FIG. 1;

FIG. 3 is an illustration of an optical pickup device included in the optical disk device shown in FIG. 2;

FIG. 4A is an illustration of an optical path of a light beam emitted by a light source included in the optical pickup device shown in FIG. 3;

FIG. 4B is an illustration of an optical path of a light beam emitted by another light source included in the optical pickup device shown in FIG. 3;

FIG. 4C is an illustration of an optical path of a light beam emitted by yet another light source included in the optical pickup device shown in FIG. 3;

FIG. 5 illustrates a relationship between a plane hologram element and a volume hologram element included in the optical pickup device shown in FIG. 3;

FIG. 6 illustrates a relationship between the plane hologram element shown in FIG. 5 and another volume hologram element included in the optical pickup device shown in FIG. 3;

FIG. 7 illustrates a relationship between the plane hologram element shown in FIG. 5 and yet another volume hologram element included in the optical pickup device shown in FIG. 3;

FIG. 8 illustrates light spots formed in recording layers of an optical disk accessed by the optical pickup device shown in FIG. 3;

FIG. 9 is an illustration of an optical detection device included in the optical pickup device shown in FIG. 3;

FIG. 10 is a flowchart of recording processing performed by the optical disk device shown in FIG. 2 when the optical disk device receives a recording request from a host connected to the optical disk device;

FIG. 11 is a flowchart of playback processing performed by the optical disk device shown in FIG. 2 when the optical disk device receives a playback request from a host connected to the optical disk device;

FIG. 12 is a graph illustrating an example relationship between an incident angle of a light beam and a first diffraction efficiency of hologram elements having parameters different from each other;

FIG. 13 is a graph for explaining an angular selectivity of a volume hologram;

FIG. 14 is a graph for explaining a wavelength selectivity of a volume hologram;

FIG. 15 is a graph for explaining effects of a plane hologram element;

FIG. 16 is an illustration of the plane hologram element shown in FIG. 5 having blazed grating;

FIG. 17 illustrates a variation of the light spots shown in FIG. 8;

FIG. 18 illustrates three light spots formed in a single recording layer of an optical disk accessed by the optical pickup device shown in FIG. 3;

FIG. 19 is an illustration of an optical pickup device according to another exemplary embodiment of the present invention;

FIG. 20 is an illustration of an optical detection device included in the optical pickup device shown in FIG. 19;

FIG. 21 is an illustration of an optical pickup device according to yet another exemplary embodiment of the present invention; and

FIG. 22 illustrates light spots formed in an optical disk accessed by the optical pickup device shown in FIG. 21.

## DETAILED DESCRIPTION OF THE PREFERRED EMBODIMENTS

In describing preferred embodiments illustrated in the drawings, specific terminology is employed for the sake of clarity. However, the disclosure of this patent specification is not intended to be limited to the specific terminology so selected, and it is to be understood that each specific element includes all technical equivalents that operate in a similar manner.

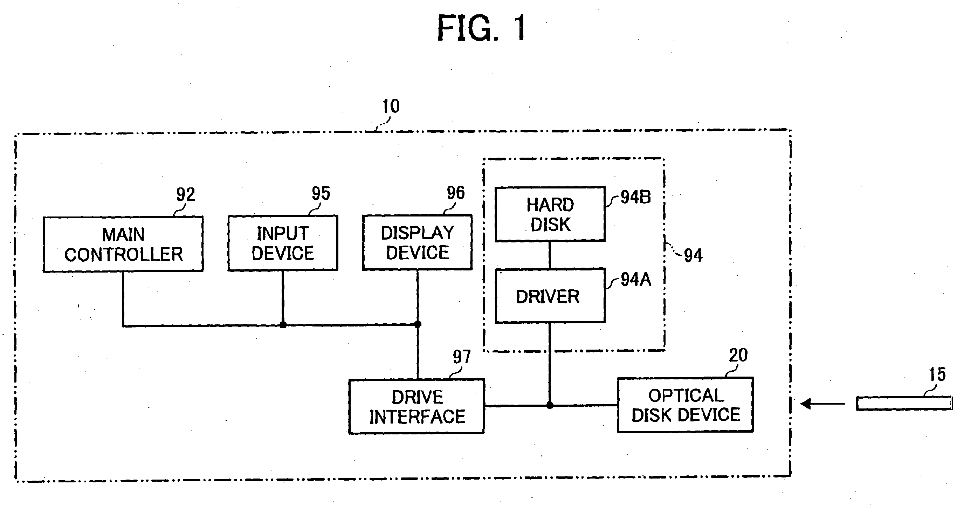

Referring now to the drawings, wherein like reference numerals designate identical or corresponding parts throughout the several views, particularly to FIG. 1, an information processing apparatus 10 according to an exemplary embodiment of the present invention is explained.

As illustrated in FIG. 1, the information processing apparatus 10 includes a display device 96, a main controller 92, an input device 95, a drive interface 97, an optical disk device 20, and an HDD (hard disk drive) 94. The HDD 94 includes a hard disk 94B and a driver 94A. The information processing apparatus 10 is connected to an optical disk 15.

The display device 96 includes a display (not shown), such as a CRT (cathode ray tube), an LCD (liquid crystal display), and a PDP (plasma display panel), and displays information instructed by the main controller 92.

The input device 95 includes an input medium (not shown) including at least one of a keyboard, a mouse, a tablet, a light pen, and a touch panel, and sends information input by a user to the main controller 92. The information may be sent from the input medium to the main controller 92 in a wireless method. The display device 96 and the input device 95 may be integrated into an LCD with a touch panel, for example.

The drive interface 97 may be an interactive interface with the main controller 92, the optical disk device 20, and the HDD 94, and complies with a standard interface. In the HDD 94, the driver 94A drives the hard disk 94B.

In the information processing apparatus 10 having the above-described structure, when the user inputs a playback request for playing back information from the optical disk 15 via the input device 95, the main controller 92 sends the playback request to the optical disk device 20. When the optical disk device 20 receives the playback request, the optical disk device 20 performs a playback operation. The main controller 92 displays a playback result sent from the optical disk device 20 on the display of the display device 96.

When the user inputs a recording request for recording information to the optical disk 15 via the input device 95, the main controller 92 sends the recording request and record data to the optical disk device 20. When the optical disk device 20 receives the recording request, the optical disk device 20 performs a recording operation. The main controller 92 displays a record result sent from the optical disk device 20 on the display of the display device 96.

The information processing apparatus 10 according to this exemplary embodiment includes the optical disk device 20 which may access a plurality of recording positions of the optical disk 15 simultaneously. As a result, the information processing apparatus 10 may stably access the optical disk 15 at an increased speed.

The optical disk device 20 may be an internal type or an external type. Namely, the optical disk device 20 may be located inside or outside the information processing apparatus 10. According to this exemplary embodiment, the optical disk device 20 is an optical disk device capable of recording and playback of information. However, the optical disk device 20 may be an optical disk device capable of playback and incapable of recording of information.

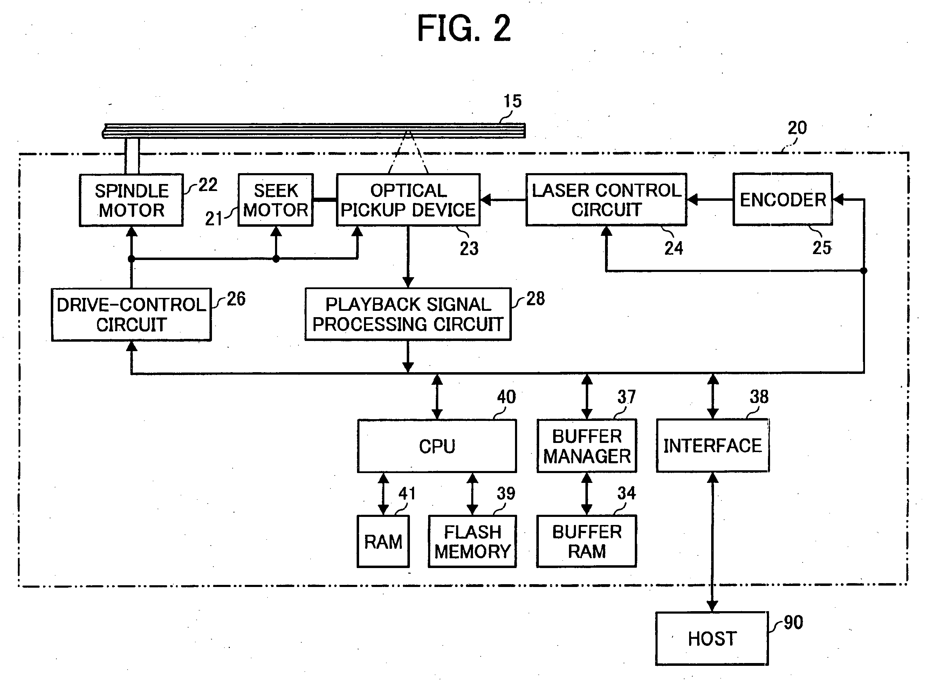

FIG. 2 is a block diagram of the optical disk device 20 and a host 90 connected to the optical disk device 20. The optical disk device 20 includes a spindle motor 22, an optical pickup device 23, a seek motor 21, a playback signal processing circuit 28, a drive-control circuit 26, a CPU (central processing unit) 40, an encoder 25, a buffer RAM (random access memory) 34, a buffer manager 37, a laser control circuit 24, an interface 38, a flash memory 39, and a RAM 41.

The spindle motor 22 drives and rotates the optical disk 15. The optical pickup device 23 may simultaneously emit light beams (e.g., laser beams) to three recording layers of the optical disk 15, and may simultaneously receive light beams reflected by the three recording layers. The seek motor 21 drives the optical pickup device 23 in a seek direction.

Arrows illustrated in FIG. 2 show typical flows of signals and information and do not show all flows of signals and information.

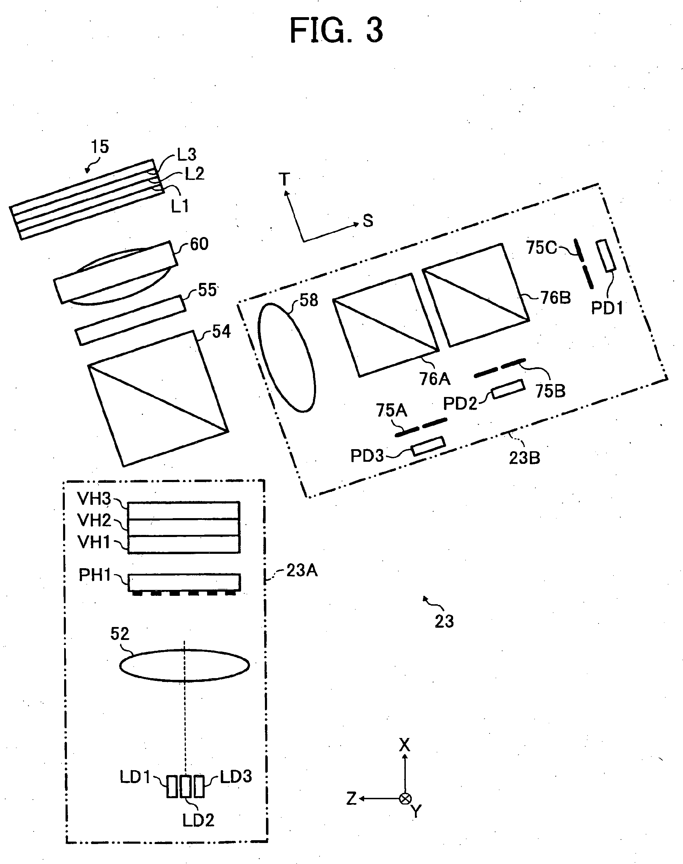

FIG. 3 is a schematic view of the optical pickup device 23. The optical pickup device 23 includes a light source device 23A, a polarizing beam splitter 54, a λ/4 plate 55, an objective lens 60, and an optical detection device 23B. The light source device 23A includes light sources LD1, LD2, and LD3, a collimating lens 52, a plane hologram element PH1, and volume hologram elements VH1, VH2, and VH3. The optical detection device 23B includes a condensing lens 58, half prisms 76A and 76B, pinhole plates 75A, 75B, and 75C, and optical receivers PD1, PD2, and PD3. The optical disk 15 includes a first recording layer L1, a second recording layer L2, and a third recording layer L3.

The optical disk 15 includes three layers, that is, the first recording layer L1, the second recording layer L2, and the third recording layer L3. A light beam enters the first recording layer L1, the second recording layer L2, and the third recording layer L3 in this order.

Each of the light sources LD1, LD2, and LD3 is a semiconductor laser for emitting a light beam (e.g., a laser beam) having a wavelength λ of about 650 nm. In this specification, the light source LD2 emits a light beam in a full magnitude emission direction indicated as a positive direction of an X-axis. A Y-axis direction and a Z-axis direction are perpendicular to each other on a surface perpendicular to the X-axis direction. The light source LD1 is disposed with respect to the light source LD2 in a positive side of the Z-axis. The light source LD3 is disposed with respect to the light source LD2 in a negative side of the Z-axis. Each of the light sources LD1, LD2, and LD3 emits p-polarized light, for example.

The collimating lens 52 is disposed with respect to each of the light sources LD1, LD2, and LD3 in a positive side of the X-axis. The light source LD2 is disposed on an optical axis of the collimating lens 52. The collimating lens 52 shapes light beams emitted by each of the light sources L1, L2, and L3 into beams substantially parallel to each other.

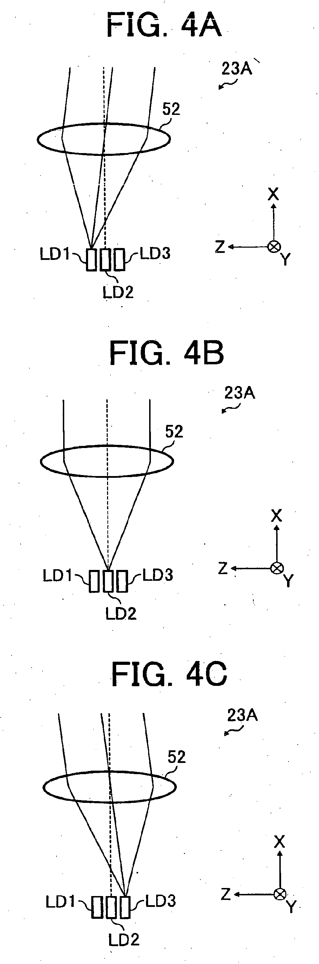

FIGS. 4A, 4B, and 4C illustrate a partially enlarged view of the light source device 23A. As illustrated in FIG. 4A, the light source LD1 is disposed with respect to the optical axis of the collimating lens 52 in the positive side of the Z-axis. Therefore, when light beams emitted by the light source LD1 pass through the collimating lens 52, the light beams are substantially parallel to each other but tilted with respect to the optical axis of the collimating lens 52.

As illustrated in FIG. 4B, the light source LD2 is disposed on the optical axis of the collimating lens 52. Therefore, when light beams emitted by the light source LD2 pass through the collimating lens 52, the light beams are substantially parallel to the optical axis of the collimating lens 52.

As illustrated in FIG. 4C, the light source LD3 is disposed with respect to the optical axis of the collimating lens 52 in the negative side of the Z-axis. Therefore, when light beams emitted by the light source LD3 pass through the collimating lens 52, the light beams are substantially parallel to each other but tilted with respect to the optical axis of the collimating lens 52 in a direction opposite to a direction in which the light beams emitted by the light source LD1 are tilted.

When a gap of about 100 $\mu$m is provided between the light sources LD1 and LD2 and between the light sources LD2 and LD3 in the Z-axis direction, and the collimating lens 52 has a focal length of about 19 mm, light beams emitted by the light source LD1 and passing through the collimating lens 52 are tilted for about 0.30 degrees in a positive direction (i.e., clockwise) with respect to the optical axis of the collimating lens 52, as illustrated in FIG. 4A. Light beams emitted by the light source LD3 and passing through the collimating lens 52 are tilted for about 0.30 degrees in a negative direction (i.e., counterclockwise) with respect to the optical axis of the collimating lens 52, as illustrated in FIG. 4C.

Namely, the collimating lens 52 outputs substantially parallel beams being parallel to the optical axis of the collimating lens 52, substantially parallel beams tilted for about 0.30 degrees in the positive direction with respect to the optical axis of the collimating lens 52, and substantially parallel beams tilted for about 0.30 degrees in the negative direction with respect to the optical axis of the collimating lens 52.

As illustrated in FIG. 3, the plane hologram element PH1 is disposed with respect to the collimating lens 52 in the positive side of the X-axis. The plane hologram element PH1 diffracts the substantially parallel beams output from the collimating lens 52. Specifically, the plane hologram element PH1 diffracts first light source beams emitted by the light source LD1, second light source beams emitted by the light source LD2, and third light source beams emitted by the light source LD3.

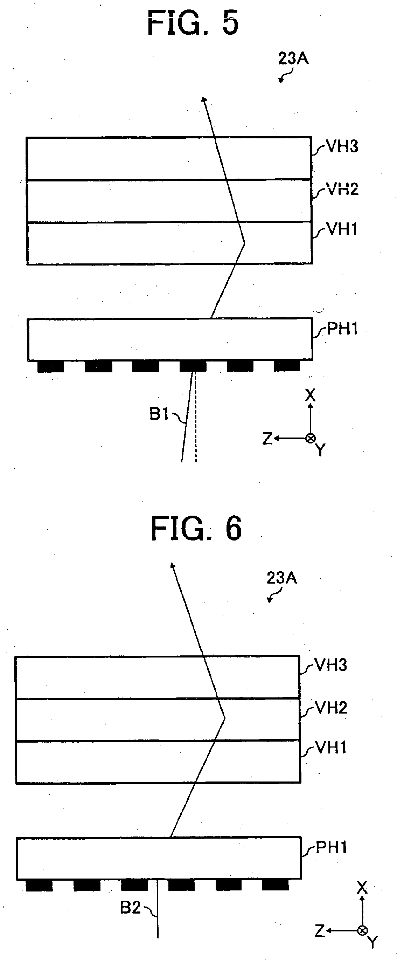

FIGS. 5 to 7 illustrate a partially enlarged view of the light source device 23A. As illustrated in FIG. 5, the volume hologram element VH1 is disposed with respect to the plane hologram element PH1 in the positive side of the X-axis, and diffracts a first light source beam B1 emitted by the light source LD1 (depicted in FIG. 4A). The volume hologram element VH1 does not diffract a second light source beam B2 emitted by the light source LD2 (depicted in FIG. 4B) and a third light source beam B3 emitted by the light source LD3 (depicted in FIG. 4C). Namely, the second light source beam B2 and the third light source beam B3 pass through the volume hologram element VH1 without being diffracted by the volume hologram element VH1.

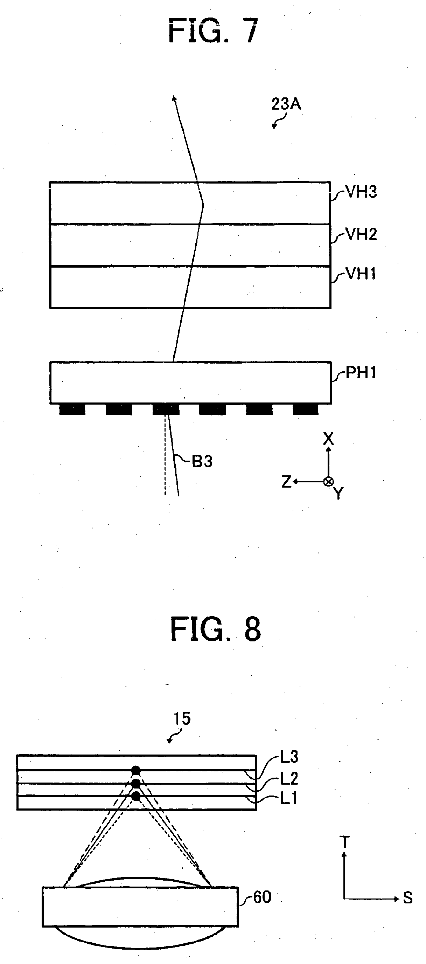

As illustrated in FIG. 6, the volume hologram element VH2 is disposed with respect to the volume hologram element VH1 in the positive side of the X-axis, and diffracts the second light source beam B2. The volume hologram element VH2 does not diffract the first light source beam B1 diffracted by the volume hologram element VH1 (depicted in FIG. 5) and the third light source beam B3 (depicted in FIG. 7). Namely, the first light source beam B1 diffracted by the volume hologram element VH1 and the third light source beam B3 pass through the volume hologram element VH2 without being diffracted by the volume hologram element VH2.

As illustrated in FIG. 7, the volume hologram element VH3 is disposed with respect to the volume hologram element VH2 in the positive side of the X-axis, and diffracts the third light source beam B3. The volume hologram element VH3 does not diffract the first light source beam B1 diffracted by the volume hologram element VH1 (depicted in FIG. 5) and the second light source beam B2 diffracted by the volume hologram element VH2 (depicted in FIG. 6). Namely, the first and second light source beams B1 and B2 diffracted by the volume hologram elements VH1 and VH2, respectively, pass through the volume hologram element VH3 without being diffracted by the volume hologram element VH3.

As illustrated in FIG. 3, the polarizing beam splitter 54 is disposed on a common optical path of the light beams diffracted by the volume hologram elements VH1, VH2, and VH3 toward the optical disk 15 and return light beams returned from the optical disk 15. The light beams (i.e., p-polarized light) diffracted by the volume hologram elements VH1, VH2, and VH3 pass through the polarizing beam splitter 54. The polarizing beam splitter 54 branches the return light beams (i.e., s-polarized light) returned from the optical disk 15. According to this exemplary embodiment, the light beams diffracted by the volume hologram elements VH1, VH2, and VH3 travel in a positive direction of a T-axis. The return light beams are branched in a positive direction of an S-axis.

The $\lambda$/4 plate 55 is disposed with respect to the polarizing beam splitter 54 in a positive side of the T-axis, and applies an optical phase difference of 1/4 wavelength to an input beam. The objective lens 60 is disposed with respect to the $\lambda$/4 plate 55 in the positive side of the T-axis, and gathers the light beams via the $\lambda$/4 plate 55. A driver (not shown) included in the optical pickup device 23 drives the objective lens 60.

FIG. 8 illustrates the objective lens 60 and the optical disk 15. When the objective lens 60 properly performs focus control, light beams emitted by the light source LD1 (depicted in FIG. 3) are gathered in the first recording layer L1. Light beams emitted by the light source LD2 (depicted in FIG. 3) are gathered in the second recording layer L2. Light beams emitted by the light source LD3 (depicted in FIG. 3) are gathered in the third recording layer L3. Namely, when the three light sources LD1, LD2, and LD3 emit light beams simultaneously, light spots may be formed in the three recording layers (i.e., the first recording layer L1, the second recording layer L2, and the third recording layers L3) of the optical disk 15 simultaneously. The light spots are formed on an optical axis of the objective lens 60.

As illustrated in FIG. 3, the condensing lens 58 is disposed with respect to the polarizing beam splitter 54 in a positive side of the S-axis, and gathers the return light beams branched by the polarizing beam splitter 54. For example, among the return light beams returned from the optical disk 15, return light beams returned from the first recording layer L1 enter the condensing lens 58 in a state that the return light beams are somewhat converged. Return light beams returned from the second recording layer L2 enter the condensing lens 58 in a state that the return light beams are paralleled with each other. Return light beams returned from the third recording layer L3 enter the condensing lens 58 in a state that the return light beams are somewhat diffused.

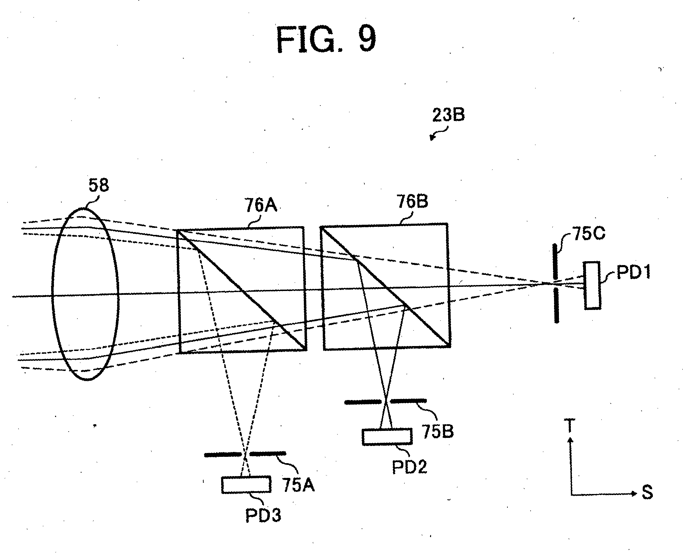

FIG. 9 illustrates the optical detection device 23B. The half prism 76A is disposed with respect to the condensing lens 58 in the positive side of the S-axis. The half prism 76A reflects the return light beams returned from the first recording layer L1 (depicted in FIG. 3) via the condensing lens 58 in a negative direction of the T-axis. The other return light beams pass through the half prism 76A. The half prism 76B is disposed with respect to the half prism 76A in the positive side of the S-axis. The half prism 76B reflects the return light beams returned from the second recording layer L2 (depicted in FIG. 3) and passing through the half prism 76A in the negative direction of the T-axis. The other return light beams pass through the half prism 76B.

The pinhole plate 75A is disposed with respect to the half prism 76A in a negative side of the T-axis, and restricts a diameter of the light beams reflected by the half prism 76A. The optical receiver PD3 receives the light beams passing through the pinhole plate 75A. Therefore, the optical receiver PD3 mainly receives the return light beams returned from the first recording layer L1.

The pinhole plate 75B is disposed with respect to the half prism 76B in the negative side of the T-axis, and restricts a diameter of the light beams reflected by the half prism 76B. The optical receiver PD2 receives the light beams passing through the pinhole plate 75B. Therefore, the optical receiver PD2 mainly receives the return light beams returned from the second recording layer L2.

The pinhole plate 75C is disposed with respect to the half prism 76B in the positive side of the S-axis, and restricts a diameter of the light beams passing through the half prism 76B. The optical receiver PD1 receives the light beams passing through the pinhole plate 75C. Therefore, the optical receiver PD1 mainly receives the return light beams returned from the third recording layer L3 (depicted in FIG. 3).

The pinhole plates 75A, 75B, and 75C are provided to remove crosstalk between layers. The driver for driving the objective lens 60 (depicted in FIG. 3) includes a focusing actuator and a tracking actuator. The focusing actuator drives the objective lens 60 slightly in a focus direction (i.e., an optical axis direction of the objective lens 60). The tracking actuator drives the objective lens 60 slightly in a tracking direction.

Referring to FIG. 3, the following describes operations of the optical pickup device 23 having the above-described structure. The light source LD1 emits straight-polarized light (i.e., p-polarized light) beams. The collimating lens 52 shapes the light beams emitted by the light source LD1 into substantially parallel light beams. The plane hologram element PH1 diffracts the substantially parallel light beams. The volume hologram element VH1 further diffracts the light beams. The diffracted light beams pass through the volume hologram elements VH2 and VH3 and enter the polarizing beam splitter 54.

The light source LD2 emits straight-polarized light (i.e., p-polarized light) beams. The collimating lens 52 shapes the light beams emitted by the light source LD2 into substantially parallel light beams. The plane hologram element PH1 diffracts the substantially parallel light beams. The diffracted light beams pass through the volume hologram element VH1. The volume hologram element VH2 further diffracts the light beams. The diffracted light beams pass through the volume hologram element VH3 and enter the polarizing beam splitter 54.

The light source LD3 emits straight-polarized light (i.e., p-polarized light) beams. The collimating lens 52 shapes the light beams emitted by the light source LD3 into substantially parallel light beams. The plane hologram element PH1 diffracts the substantially parallel light beams. The diffracted light beams pass through the volume hologram elements VH1 and VH2. The volume hologram element VH3 further diffracts the light beams. The diffracted light beams enter the polarizing beam splitter 54.

Most of the light beams entering the polarizing beam splitter 54 pass through the polarizing beam splitter 54, and are circularly polarized by the $\lambda/4$ plate 55. The circularly polarized light beams are gathered in the first recording layer L1, the second recording layer L2, and the third recording layer L3 of the optical disk 15 via the objective lens 60.

The first recording layer L1, the second recording layer L2, and the third recording layer L3 reflect the light beams. The reflected light beams are circularly polarized in a direction opposite to a forward direction in which the light beams are circularly polarized in a forward route from the polarizing beam splitter 54 to the optical disk 15. The light beams enter the $\lambda/4$ plate 55 via the objective lens 60 as return light beams. The $\lambda/4$ plate 55 polarizes the light beams into straight-polarized light (i.e., s-polarized light) beams traveling in a direction perpendicular to the direction in which the light beams travel in the forward route. The return light beams enter the polarizing beam splitter 54.

The polarizing beam splitter 54 branches the return light beams in the positive direction of the S-axis. The return light beams enter the half prism 76A via the condensing lens 58. Among the return light beams entering the half prism 76A, return light beams returned from the first recording layer L1 are reflected by the half prism 76A, and enter the optical receiver PD3 via the pinhole plate 75A.

Return light beams passing through the half prism 76A enter the half prism 76B. Among the return light beams entering the half prism 76B, return light beams returned from the second recording layer L2 are reflected by the half prism 76B, and enter the optical receiver PD2 via the pinhole plate 75B. Return light beams passing through the half prism 76B enter the optical receiver PD1 via the pinhole plate 75C.

Like in general optical disk devices, each of the optical receivers PD1, PD2, and PD3 includes a plurality of light-sensitive elements or a plurality of light-sensitive areas' for outputting signals relating to wobble signal information, playback data information, focus error information, and track error information. Each of the light-sensitive elements or the light-sensitive areas generates a signal in accordance with an amount of received light by optical/electrical conversion, and outputs the signal to the playback signal processing circuit 28 (depicted in FIG. 2).

As illustrated in FIG. 2, the playback signal processing circuit 28 obtains a servo signal (e.g., a focus error signal and a track error signal), address information, a synchronous signal, an RF (radio frequency) signal, and/or the like based on an output signal (i.e., the plurality of optical/electrical conversion signals) output by each of the optical receivers PD1, PD2, and PD3 (depicted in FIG. 3) of the optical pickup device 23.

The playback signal processing circuit 28 outputs the servo signal and the address information to the drive-control circuit 26 and the CPU 40, respectively. The playback signal processing circuit 28 outputs the synchronous signal to the encoder 25 and the drive-control circuit 26. The playback signal processing circuit 28 performs decoding processing and error detection processing on the RF signal. When an error is detected, the playback signal processing circuit 28 performs error correction processing, and stores the processed signal into the buffer RAM 34 via the buffer manager 37 as playback data. The playback signal processing circuit 28 outputs address information contained in the playback data to the CPU 40.

The drive-control circuit 26 generates a driving signal for the driver of the optical pickup device 23 based on the servo signal output by the playback signal processing circuit 28, and outputs the driving signal to the optical pickup device 23. Thus, the optical pickup device 23 may perform tracking control and focus control. The drive-control circuit 26 generates a driving signal for driving the seek motor 21 and a driving signal for driving the spindle motor 22 based on instructions of the CPU 40, and outputs the driving signals to the seek motor 21 and the spindle motor 22, respectively.

The buffer RAM 34 temporarily stores data (i.e., record data) to be recorded in the optical disk 15, data played back (i.e., playback data) from the optical disk 15, and/or the like. The buffer manager 37 manages input and output of the data to and from the buffer RAM 34.

The encoder 25 retrieves the record data stored in the buffer RAM 34 via the buffer manager 37 based on an instruction of the CPU 40, performs data modulation and addition of an error correction code, and generates a writing signal for the optical disk 15 for each of the first recording layer L1, the second recording layer L2, and the third recording layer L3 (depicted in FIG. 3). The encoder 25 outputs the writing signal to the laser control circuit 24.

The laser control circuit 24 controls light emission power of the light sources LD1, LD2, and LD3 (depicted in FIG. 3) of the optical pickup device 23. To perform recording, for example, the laser control circuit 24 generates a driving signal for each of the light sources LD1, LD2, and LD3-based on the writing signal, a recording condition, light emission property of each of the light sources LD1, LD2, and LD3, and/or the like.

The interface 38 interfaces the optical disk device 20 with the host 90 (e.g., a personal computer) for interactive communication, and complies with standard interfaces common to the drive interface 97 of the information processing apparatus 10 (depicted in FIG. 1), such as ATAPI (AT attachment packet interface), SCSI (small computer system interface), and USB (universal serial bus).

The flash memory 39 stores various programs described in a code interpretable by the CPU 40 and a light emission property of each of the light sources LD1, LD2, and LD3. The CPU 40 controls operations of the optical disk device 20 in accordance with the programs stored in the flash memory 39. The CPU 40 also saves data needed for control in the RAM 41 and the buffer RAM 34.

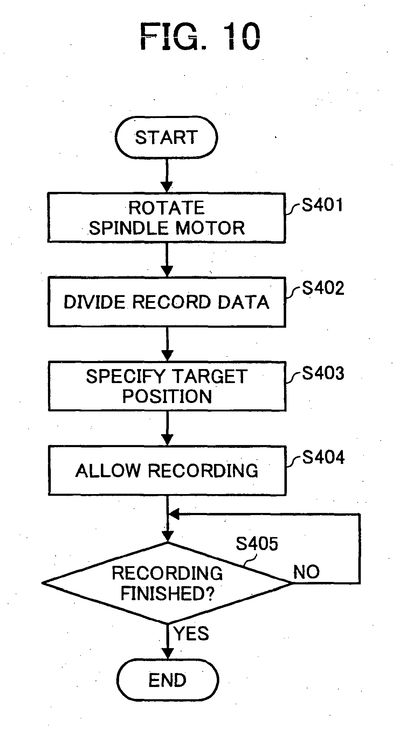

Referring to FIG. 10, the following describes recording processing performed by the optical disk device 20 (depicted in FIG. 2) when the host 90 (depicted in FIG. 2) requests recording of user data. FIG. 10 is a flowchart illustrating processes corresponding to processing algorisms performed by the CPU 40 (depicted in FIG. 2). When the optical disk device 20 receives a recording request from the host 90, a head address of a program corresponding to the processes illustrated in FIG. 10 is set in a program counter of the CPU 40 to start recording processing.

In step S401, the CPU 40 instructs the drive-control circuit 26 (depicted in FIG. 2) to rotate the spindle motor 22 (depicted in FIG. 2) for rotating the optical disk 15 (depicted in FIG. 2) at a predetermined linear speed or a predetermined angular speed. The CPU 40 also notifies the playback signal processing circuit 28 (depicted in FIG. 2) that the optical disk device 20 has received a recording request from the host 90. Further, the CPU 40 specifies a recording layer into which user data is recorded in accordance with the recording request, and notifies the specification result to the playback signal processing circuit 28, the encoder 25 (depicted in FIG. 2), and the laser control circuit 24 (depicted in FIG. 2). In the processes illustrated in FIG. 10, user data is recorded into the first recording layer L1, the second recording layer L2, and the third recording layer L3 (depicted in FIG. 3).

In step S402, the CPU 40 divides the user data (e.g., record data) sent from the host 90 and stored in the buffer RAM 34 (depicted in FIG. 2) into user data to be recorded into the first recording layer L1, user data to be recorded into the second recording layer L2, and user data to be recorded into the third recording layer L3.

In step S403, the CPU 40 instructs the drive-control circuit 26 to form a light spot near a target position corresponding to a specified address. Accordingly, a seek operation is performed. If the seek operation is not needed, step S403 is skipped.

In step S404, the CPU 40 allows recording. Accordingly, the user data is recorded into the first recording layer L1, the second recording layer L2, and the third recording layer L3 of the optical disk 15 via the encoder 25, the laser control circuit 24, and the optical pickup device 23 (depicted in FIG. 2).

In step S405, the CPU 40 determines whether or not recording is finished. If recording is not finished (i.e., if NO is selected in step S405), the CPU 40 determines again when a predetermined time period elapses. If recording is finished (i.e., if YES is selected in step S405), the CPU 40 notifies the host 90 that recording is finished, and finishes the recording processing. According to this exemplary embodiment, the user data is recorded into the first recording layer L1, the second recording layer L2, and the third recording layer L3 almost simultaneously. Thus, the optical disk device 20 may complete the recording processing in a shortened time period.

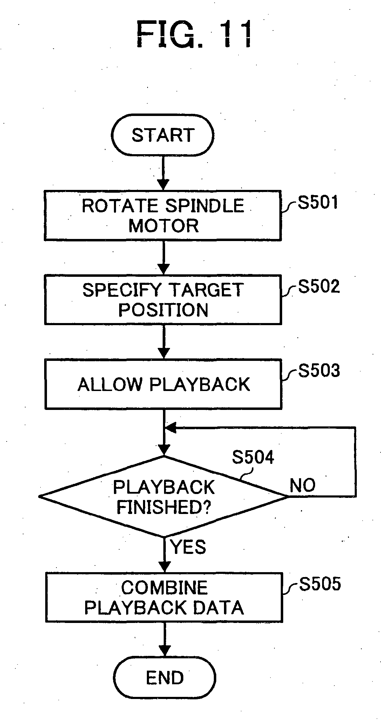

Referring to FIG. 11, the following describes playback processing performed by the optical disk device 20 (depicted in FIG. 2) when the host 90 (depicted in FIG. 2) requests playback. FIG. 11 is a flowchart illustrating processes corresponding to processing algorisms performed by the CPU 40 (depicted in FIG. 2). When the optical disk device 20 receives a playback request from the host 90, a head address of a program corresponding to the processes illustrated in FIG. 11 is set in a program counter of the CPU 40 to start playback processing.

In step S501, the CPU 40 instructs the drive-control circuit 26 (depicted in FIG. 2) to rotate the spindle motor 22 (depicted in FIG. 2) for rotating the optical disk 15 (depicted in FIG. 2) at a predetermined linear speed or a predetermined angular speed. The CPU 40 also notifies the playback signal processing circuit 28 (depicted in FIG. 2) that the optical disk device 20 has received a playback request from the host 90. Further, the CPU 40 specifies a recording layer having data to be played back in accordance with the playback request, and notifies the specification result to the playback signal processing circuit 28 and the laser control circuit 24 (depicted in FIG. 2). In the processes illustrated in FIG. 11, data recorded in the first recording layer L1, the second recording layer L2, and the third recording layer L3 (depicted in FIG. 3) is played back.

In step S502, the CPU 40 instructs the drive-control circuit 26 to form a light spot near a target position corresponding to a specified address. Accordingly, a seek operation is performed. If the seek operation is not needed, step S502 is skipped.

In step S503, the CPU 40 allows playback. Accordingly, the data recorded in the first recording layer L1, the second recording layer L2, and the third recording layer L3 of the optical disk 15 is played back via the optical pickup device 23 (depicted in FIG. 2) and the playback signal processing circuit 28.

In step S504, the CPU 40 determines whether or not playback is finished. If playback is not finished (i.e., if NO is selected in step S504), the CPU 40 determines again when a predetermined time period elapses. If playback is finished (i.e., if YES is selected in step S504), the CPU 40 combines playback data sent from the first recording layer L1, playback data sent from the second recording layer L2, and playback data sent from the third recording layer L3, and transfers the combined data to the host 90 to finish the playback processing in step S505. According to this exemplary embodiment, data recorded in the first recording layer L1, the second recording layer L2, and the third recording layer L3 is played back almost simultaneously. Thus, the optical disk device 20 may complete the playback processing in a shortened time period.

As illustrated in FIG. 3, a plurality of substantially parallel light beams from the plane hologram element PH1 is diffracted by the corresponding volume hologram elements VH1, VH2, and VH3, respectively, because the volume hologram elements VH1, VH2, and VH3 have an angular selectivity. The angular selectivity allows each of the volume hologram elements VH1, VH2, and VH3 to diffract a light beam entering at a predetermined incident angle set for each of the volume hologram elements VH1, VH2, and VH3. Each of the volume hologram elements VH1, VH2, and VH3 does not diffract a light beam entering at an incident angle other than the predetermined incident angle. Thus, the light beam, which does not enter at the predetermined incident angle, passes through the volume hologram elements VH1, VH2, and VH3. The following describes the angular selectivity.

A volume hologram element may be a hologram element having a parameter Q of more than 10. The parameter Q is calculated by an equation (1) shown below. In the equation (1), $\lambda_0$ represents a wavelength of an incident light beam. T represents a thickness of a hologram element. $n_0$ represents a refraction index of a hologram element substrate. $\Lambda$ represents a pitch (e.g., a hologram pitch) of a groove. In the following description, the wavelength $\lambda_0$ is 650 nm in the air.

$$Q = 2\Pi\lambda_0 \, T/(n_0\Lambda^2) \cdots\cdots\cdots\cdots\cdots (1)$$

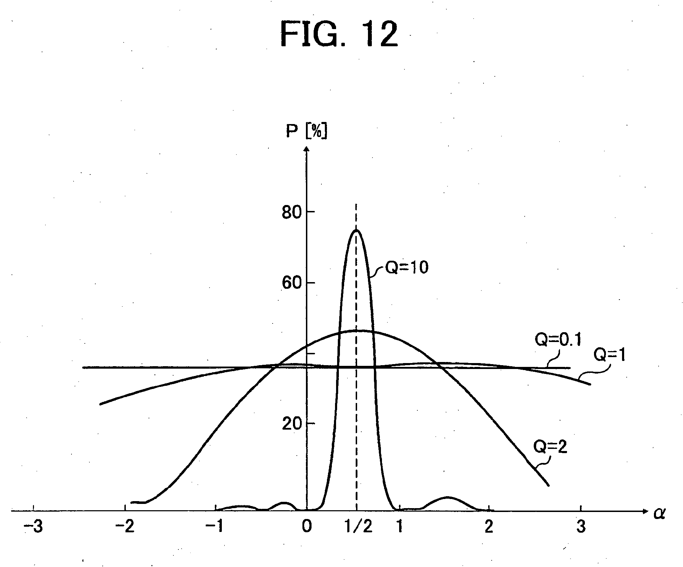

FIG. 12 is a graph illustrating an example relationship between an incident angle of a light beam and a first diffraction efficiency P (%) of hologram elements having parameters Q of 0.1, 1.0, 2.0, and 10.0, respectively. In FIG. 12, $\alpha$ is obtained by dividing an incident angle by a Bragg angle (i.e., -sin/2sin).

The graph illustrated in FIG. 12 shows that a high diffraction efficiency is provided when an incident angle of a light beam matches with a Bragg angle (i.e., $\alpha$ = 1/2). When an incident angle of a light beam does not match with a Bragg angle, a low diffraction efficiency of nearly 0 % is provided.

Generally, a hologram element having a parameter Q of 1.0 or smaller denotes a plane hologram element. As illustrated in FIG. 12, the plane hologram element, such as the plane hologram element PH1 depicted in FIG. 3, may provide a substantially constant diffraction efficiency irrespective of incident angle.

As illustrated in FIG. 3, when a gap of about 100 $\mu$m is provided between the light sources LD1 and LD2 and between the light sources LD2 and LD3 in the Z-axis direction, and the collimating lens 52 has a focal length of about 19 mm, light beams emitted by the light source LD2 enter the plane hologram element PH1 vertically (e.g., at an incident angle of 0 degrees). When the light beams are diffracted and output from the plane hologram element PH1 at an exit angle of $\theta$m, light beams emitted by the light source LD1 are output from the plane hologram element PH1 at an exit angle of $\theta$m + 0.30 degrees. Light beams emitted by the light source LD3 are output from the plane hologram element PH1 at an exit angle of $\theta$m - 0.30 degrees. Namely, three light fluxes output from the plane hologram element PH1 enter the volume hologram elements VH1, VH2, and VH3 at incident angles by about 0.30 degrees different from each other, respectively. Therefore, the volume hologram elements VH1, VH2, and VH3 may have angular selectivities by about 0.30 degrees different from each other, respectively.

A volume hologram has a wavelength selectivity as well as an angular selectivity. Therefore, when the number of light sources is increased and volume holograms have conspicuous angular selectivities to provide high-speed recording and playback, conspicuous wavelength selectivities may also be provided.

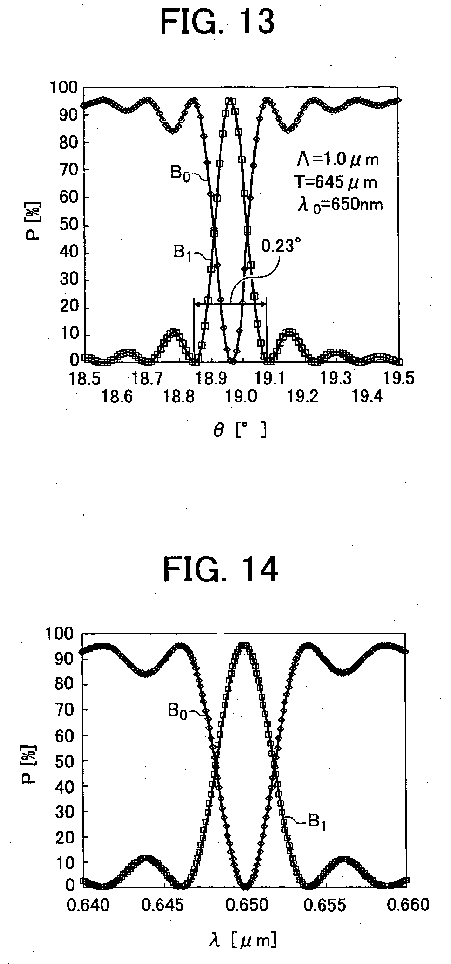

FIG. 13 is a graph for explaining an angular selectivity of a volume hologram. When a light beam having a wavelength $\lambda_0$ of 650 nm enters a volume hologram having a hologram pitch $\Lambda$ of 1.0 $\mu$m and a thickness T of 645 $\mu$m, a maximum diffraction efficiency P of about 95 percent is provided when an incident angle $\theta$ of the light beam is 18.97 degrees and matches with a Bragg angle. The volume hologram provides an angular selectivity of 0.23 degrees. When the incident angle $\theta$ of the light beam differs from the Bragg angle by 0.23 degrees/2, a diffraction efficiency P of almost 0 percent is provided. In FIG. 13, $B_0$ represents a zero light beam and $B_1$ represents a primary light beam.

FIG. 14 is a graph for explaining a wavelength selectivity of a volume hologram. When a wavelength $\lambda$ of an incident light beam entering the volume hologram at an incident angle of 18.97 degrees varies from 640 nm to 660 nm, a high diffraction efficiency P of 95 percent is provided for a light beam having a wavelength $\lambda$ of 650 nm. When the wavelength $\lambda$ deviates by about plus or minus 4 nm from 650 nm, the diffraction efficiency P decreases to nearly 0 percent. In FIG. 14, $B_0$ represents a zero light beam and $B_1$ represents a primary light beam.

In general, a laser beam emitted by a semiconductor laser included in an optical pickup device has wavelength fluctuation of about plus or minus 10 nm. Therefore, when the optical pickup device includes a volume hologram having a conspicuous wavelength selectivity, a high diffraction efficiency may not be provided unless the laser beam has a certain wavelength. Thus, when a light beam emitted by a light source has wavelength fluctuation due to change in temperature, diffraction efficiency may quickly decrease. To address this problem, the optical pickup device 23 (depicted in FIG. 3) according to this exemplary embodiment has a configuration explained by equations (2) to (7) shown below.

$$\sin\theta i + \sin\theta m = \lambda/\Lambda p \cdots\cdots\cdots\cdots\cdots\cdots (2)$$

In the equation (2), $\theta$i represents an incident angle at which a light beam enters the plane hologram element PH1 (depicted in FIG. 3). $\theta$m represents an exit angle at which the light beam is output from the plane hologram element PH1. $\lambda$ represents a wavelength of a light beam emitted by the light source LD1, LD2, or LD3 (depicted in FIG. 3). $\Lambda$p represents a hologram pitch of the plane hologram element PH1.

The following describes a light beam (i.e., a second light source beam) emitted by the light source LD2. The second light source beam emitted by the light source LD2 enters the plane hologram element PH1 vertically at an incident angle $\theta$i of 0 degrees. Therefore, the equation (2) is changed into an equation (3) shown below.

$$\sin\theta m = \lambda/\Lambda p \cdots\cdots\cdots\cdots\cdots\cdots (3)$$

As shown in an equation (4) below, the second light source beam emitted by the light source LD2 enters the volume hologram element VH2 (depicted in FIG. 3) at an incident angle $\theta$m. The volume hologram element VH2 diffracts the second light source beam, and the second light source beam is output from the volume hologram element VH2 at an exit angle θn. In the equation (4), $\Lambda_2$ represents a hologram pitch of the volume hologram element VH2.

$$\sin\theta m + \sin\theta n = \lambda/\Lambda_2 \cdots\cdots\cdots\cdots (4)$$

When the incident angle θm, the exit angle θn, and a Bragg angle θB are equal to each other, a Bragg condition is satisfied and a second light source beam is diffracted at a highest diffraction efficiency. Therefore, when a relationship indicated as θm = θn = θB is applied to the equation (4), the Bragg angle θ B is shown as an equation (5) below.

$$\sin\theta B = \lambda/(2 \times \Lambda_2) \cdots\cdots\cdots\cdots (5)$$

When the Bragg condition is satisfied, the incident angle θm equals to the Bragg angle θB. Therefore, an equation (6) below is derived from the equation (5).

$$\sin\theta m = \lambda/(2 \times \Lambda_2) \cdots\cdots\cdots\cdots (6)$$

Substitution of the equation (6) into the equation (3) yields an equation (7) below.

$$0 = \lambda/\Lambda p - \sin\theta m$$
$$= \lambda/\Lambda p - \lambda/(2 \times \Lambda_2)$$
$$= \lambda(1/\Lambda p - 1/(2 \times \Lambda_2)) \cdots\cdots\cdots\cdots (7)$$

When an incident angle entering the plane hologram element PH1 is 0 degrees and an equation of $\Lambda p = (2 \times \Lambda_2)$ is satisfied, the Bragg condition is satisfied irrespective of the wavelength λ.

According to this exemplary embodiment, a second light source beam emitted by the light source LD2 enters the plane hologram element PH1 at an incident angle of 0 degrees. The hologram pitch $\Lambda p$ of the plane hologram element PH1 is twice as great as the hologram pitch $\Lambda_2$ of the volume hologram element VH2. Therefore, the second light source beam enters the volume hologram element VH2 at the Bragg angle. Thus, even when the second light source beam emitted by the light source LD2 has wavelength fluctuation, the volume hologram element VH2 may diffract the second light source beam at an increased diffraction efficiency constantly.

The following describes a light beam (i.e., a first light source beam) emitted by the light source LD1. As shown in an equation (8) below, the first light source beam emitted by the light source LD1 enters the volume hologram element VH1 (depicted in FIG. 3) at an incident angle θm. The volume hologram element VH1 diffracts the first light source beam, and the first light source beam is output from the volume hologram element VH1 at an exit angle θn. In the equation (8), $\Lambda_1$ represents a hologram pitch of the volume hologram element VH1.

$$\sin\theta m + \sin\theta n = \lambda/\Lambda_1 \cdots\cdots\cdots\cdots (8)$$

When the incident angle θm, the exit angle θn, and a Bragg angle θB are equal to each other, a Bragg condition is satisfied and a first light source beam is diffracted at a highest diffraction efficiency. Therefore, an equation (9) below is derived from the equation (8).

$$\sin\theta m = \lambda/(2 \times \Lambda_1) \cdots\cdots\cdots\cdots (9)$$

Substitution of the equation (9) into the equation (2) yields an equation (10) below.

$$\sin\theta i = \lambda/\Lambda p - \sin\theta m$$

$$= \lambda/\Lambda p - \lambda/(2 \times \Lambda_1)$$

$$= \lambda(1/\Lambda p - 1/(2 \times \Lambda_1)) \cdots\cdots\cdots\cdots\cdots (10)$$

When the hologram pitch $\Lambda_1$ satisfies an equation (11) below, the exit angle $\theta n$, at which the first light source beam is output from the plane hologram element PH1, matches with a Bragg angle of the volume hologram element VH1, providing a high diffraction efficiency.

$$(1/\Lambda p - 1/(2 \times \Lambda_1)) = \sin\theta i/\lambda \cdots\cdots\cdots\cdots\cdots (11)$$

When the wavelength $\lambda$ changes, the hologram pitch $\Lambda_1$ needs to change. Otherwise, the equation (11) may not be obtained.

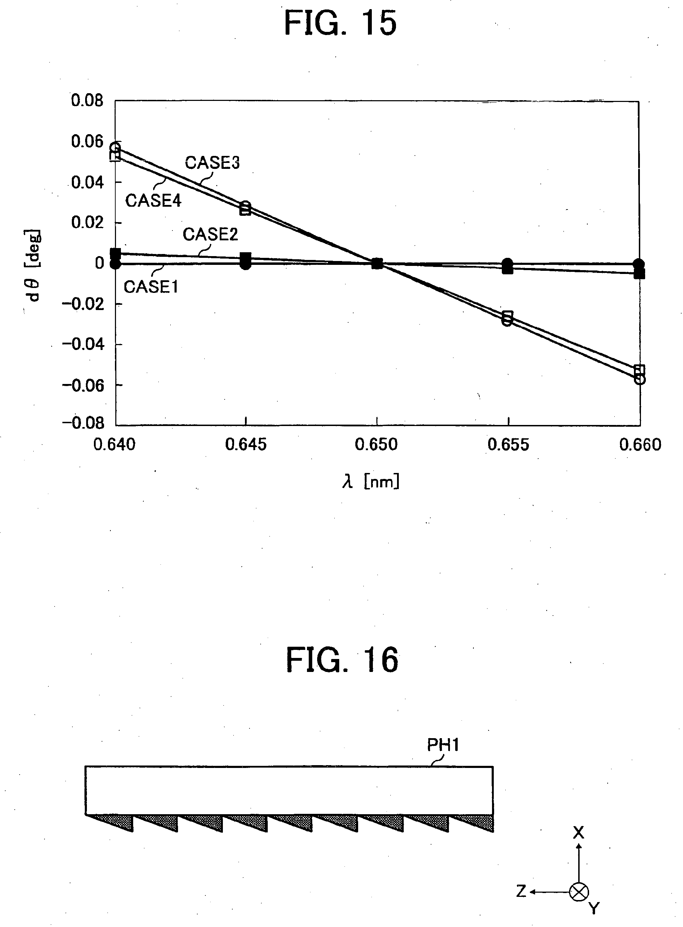

FIG. 15 is a graph illustrating a relationship between a deviation $d\theta$ of an incident angle at which a first light source beam enters a volume hologram element from a Bragg angle and a wavelength $\lambda$ in cases 1 to 4. In case 1, a plane hologram element is disposed in front of a volume hologram element in a traveling direction of a light beam, and the light beam enters the plane hologram element at an incident angle of 0 degrees. In case 2, a plane hologram element is disposed in front of a volume hologram element in a traveling direction of a light beam, and the light beam enters the plane hologram element at an incident angle of 0.3 degrees. In case 3, a plane hologram element is not disposed in front of a volume hologram element in a traveling direction of a light beam, and the light beam enters the volume hologram element at an incident angle of 0 degrees. In case 4, a plane hologram element is not in front of a volume hologram element in a traveling direction of a light beam, and the light beam enters the volume hologram element at an incident angle of 0.3 degrees.

In case 1, even when the wavelength $\lambda$ changes from a design wavelength of 650 nm to 640 nm or 660 nm, the light beam enters the volume hologram element constantly at an incident angle common to the Bragg angle. In case 2, when the wavelength $\lambda$ changes from the design wavelength of 650 nm to 640 nm or 660 nm, the light beam enters the volume hologram element at an incident angle deviated by plus or minus 0.005 degrees from the Bragg angle.

In cases 3 and 4, when the wavelength $\lambda$ changes from the design wavelength of 650 nm to 640 nm or 660 nm, the light beam enters the volume hologram element at an incident angle deviated by plus or minus 0.05 degrees from the Bragg angle.

As illustrated in FIG. 13, even when the incident angle $\theta$ at which the light beam enters the volume hologram element deviates by plus or minus 0.005 degrees from the Bragg angle (i.e., 18.97 degrees), a diffraction efficiency P of 90 percent or more is maintained. However, when the incident angle $\theta$ at which the light beam enters the volume hologram element deviates by plus or minus 0.05 degrees from the Bragg angle (i.e., 18.97 degrees), the diffraction efficiency P decreases to about 50 percent.

According to this exemplary embodiment, when a light beam having a wavelength $\lambda$ of 650 nm enters the volume hologram element VH1 at an incident angle $\theta i$ of 0.3 degrees, the volume hologram element VH1 has a hologram pitch $\Lambda_1$ satisfying the equation (11). Thus, the first light source beam constantly enters the volume hologram element VH1 at an incident angle equivalent to the Bragg angle. Namely, even when the first light beam emitted by the light source LD1 has wavelength fluctuation, the volume hologram element VH1 may diffract the first light source beam at a high diffraction efficiency constantly.

The following describes a light beam (i.e., a third light source beam) emitted by the light source LD3 (depicted in FIG. 3). As shown in an equation (12) below, the third light source beam emitted by the light source LD3 enters the volume hologram element VH3 (depicted in FIG. 3) at an incident angle $\theta m$. The volume hologram element VH3 diffracts the third light source beam, and the third light source beam is output from the volume hologram element VH3 at' an exit angle $\theta n$. In the equation (12), $\Lambda_3$ represents a hologram pitch of the volume hologram element VH3.

$$\sin\theta m + \sin\theta n = \lambda/\Lambda_3 \cdots\cdots\cdots\cdots\cdots (12)$$

When the incident angle $\theta m$, the exit angle $\theta n$, and a Bragg angle $\theta B$ are equal to each other, a Bragg condition is satisfied and a third light source beam is diffracted at a highest diffraction efficiency. Therefore, an equation (13) below is derived from the equation (12).

$$\sin\theta m = \lambda/(2 \times \Lambda_3) \cdots\cdots\cdots\cdots\cdots\cdots \quad (13)$$

Substitution of the equation (13) into the equation (2) yields an equation (14) below.

$$\sin\theta i = \lambda/\Lambda p - \sin\theta m$$

$$= \lambda/\Lambda p - \lambda/(2 \times \Lambda_3)$$

$$= \lambda(1/\Lambda p - 1/(2 \times \Lambda_3)) \cdots\cdots\cdots\cdots\cdots \quad (14)$$

According to this exemplary embodiment, when a light beam having a wavelength $\lambda$ of 650 nm enters the volume hologram element VH3 at an incident angle $\theta i$ of -0.3 degrees, the volume hologram element VH3 has a hologram pitch $\Lambda_3$ satisfying the equation (14). Thus, like the first light source beam emitted by the light source LD1, the third light source beam constantly enters the volume hologram element VH3 at an incident angle equivalent to the Bragg angle. Namely, even when the third light beam emitted by the light source LD3 has wavelength fluctuation, the volume hologram element VH3 may diffract the third light source beam at a high diffraction efficiency constantly.

As described above, when a plane hologram element (e.g., the plane hologram element PH1) is disposed in front of a plurality of volume hologram elements (e.g., the volume hologram elements VH1, VH2, and VH3) in a traveling direction of a light beam, fluctuation of diffraction angle of the plane hologram element is compensated with fluctuation of Bragg angle of the volume hologram element, even when wavelength fluctuation occurs. Thus, each of the volume hologram elements may maintain a high diffraction efficiency.

Each of the volume hologram elements VH1, VH2, and VH3 may include photopolymer, thermoplastic, or nanoglass. The photopolymer is an organic high polymer recording material, and is used in a WORM (write once read many) type hologram memory. Performance of the photopolymer has been substantially improved in the last several years, and manufacturers have successfully developed a material having a thickness of several hundred micrometers ($\mu$m), an improved optical property, and a decreased contraction caused by recording. For example, known photopolymers include a low-contraction photopolymer formed of 2-chemistry-materials and a low-contraction photopolymer polymerized by using cationic polymerization mechanism. As a result, the photopolymers may provide both a high luminous sensitivity and a high volume recording density. When each of the volume hologram elements VH1, VH2, and VH3 includes the photopolymers, a luminous flux generator providing a high efficiency and a high precision may be manufactured.

The thermoplastic is used in the WORM type hologram memory. For example, pigment-doped thermoplastic may provide recording and playback with light beams having various wavelengths. Manufacturers have successfully developed thermoplastic which may be formed to have a thickness of several millimeters, an improved optical property, and a decreased contraction caused by recording. As a result, the thermoplastic may provide both a high luminous sensitivity and a high volume recording density. The thermoplastic may be formed to have the thickness of several millimeters. Thus, a hologram may have a great volume property (i.e., the parameter Q) without decreasing a hologram pitch. The thermoplastic may not need micromachining, and may provide easy processing. The thermoplastic may function as a plate. Thus, a luminous flux generator providing a high efficiency and a high precision may be manufactured.

An optical function element using nanoglass is proposed. In the nanoglass, a structure of glass is controlled in nanometer. For example, semiconductor nano particles are stably and uniformly dispersed in glass to form a hologram in the glass. When a light beam irradiates the glass, a refraction index of an irradiated portion on the glass is changed to form a volume hologram. Since the nanoglass is formed of glass, known glass processing technologies may be used to manufacture an optical element having improved wavefront precision, light transmission, and heat property. The nanoglass may be formed to have the thickness of several millimeters. Thus, a hologram may have a great volume property (i.e., the parameter Q) without decreasing a hologram pitch. The nanoglass may not need micromachining, and may provide easy processing.

As illustrated in FIG. 3, the first recording layer L1, the second recording layer L2, and the third recording layer L3 are disposed at different positions, respectively, with respect to the objective lens 60. Namely, the first recording layer L1, the second recording layer L2, and the third recording layer L3 have different plate thicknesses, respectively. According to this exemplary embodiment, for example, light beams gathered in the second recording layer L2 do not have aberration.

Therefore, light beams gathered in the first recording layer L1 have aberration caused by difference between the positions of the first recording layer L1 and the second recording layer L2 with respect to the objective lens 60. Similarly, light beams gathered in the third recording layer L3 have aberration caused by difference between the positions of the third recording layer L3 and the second recording layer L2 with respect to the objective lens 60.

To correct aberration caused by difference between the positions of the first recording layer L1 and the second recording layer L2 with respect to the objective lens 60, the volume hologram element VH1 provides spherical aberration to the first light source beam. To correct aberration caused by difference between the positions of the third recording layer L3 and the second recording layer L2 with respect to the objective lens 60, the volume hologram element VH3 provides spherical aberration to the third light source beam. Namely, the volume hologram element VH1 and the volume hologram element VH3 change luminous exitance of a correspondent light beam to compensate for aberration caused by difference of plate thickness. In this specification, luminous exitance denotes degree of diffused light beams as well as degree of convergence of converged light beams.

As illustrated in FIG. 2, in the optical disk device 20 according to this exemplary embodiment, the playback signal processing circuit 28, the CPU 40, and a program executed by the CPU 40 may form a processor. At least a part of the processor or the entire processor constructed by processing performed in accordance with the program executed by the CPU 40 may be hardware.

As illustrated in FIG. 3, the optical pickup device 23 according to this exemplary embodiment includes the light source device 23A including three light sources LD1, LD2, and LD3, the plane hologram element PH1, and three volume hologram elements VH1, VH2, and VH3. A light beam emitted by the light source LD1 is diffracted by the plane hologram element PH1 and then by the volume hologram element VH1. A light beam emitted by the light source LD2 is diffracted by the plane hologram element PH1 and then by the volume hologram element VH2. A light beam emitted by the light source LD3 is diffracted by the plane hologram element PH1 and then by the volume hologram element VH3. Even when wavelength fluctuation occurs, fluctuation of diffraction angle of the plane hologram element PH1 is compensated with fluctuation of Bragg angle of each of the volume hologram elements VH1, VH2, and VH3. Therefore, each of the volume hologram elements VH1, VH2, and VH3 may maintain an increased diffraction efficiency. Thus, even when wavelength fluctuation occurs, the light source device 23A may stably output a plurality of light beams. Accordingly, the optical pickup device 23 may maintain stable performance irrespective of wavelength fluctuation.

Even when wavelength fluctuation occurs, each of the volume hologram elements VH1, VH2, and VH3 may constantly provide an increased diffraction efficiency. Thus, even when the light source LD1, LD2, or LD3 includes a semiconductor laser of low cost, a temperature controller for controlling temperature of the light source LD1, LD2, or LD3 is not needed. As a result, the light source device 23A having a compact size may be manufactured at decreased costs. Accordingly, the optical pickup device 23 having a compact size may be manufactured at decreased costs.

Each of the volume hologram elements VH1 and VH3 changes luminous exitance of a correspondent light beam to compensate for aberration caused by difference of plate thickness of the first recording layer L1, the second recording layer L2, and the third recording layer L3. Thus, proper light spots may be formed in the first recording layer L1, the second recording layer L2, and the third recording layer L3.

The optical disk device 20 (depicted in FIG. 2) according to this exemplary embodiment includes the optical pickup device 23 capable of maintaining stable performance even when wavelength fluctuation occurs. Thus, the optical disk device 20 may access a plurality of recording layers (e.g., the first recording layer L1, the second recording layer L2, and the third recording layer L3) of the optical disk 15 simultaneously.

The optical disk device 20 according to this exemplary embodiment may perform recording to the first recording layer L1, the second recording layer L2, and the third recording layer L3 almost simultaneously, resulting in quick recording to the optical disk 15. The optical disk device 20 may perform playback from the first recording layer L1, the second recording layer L2, and the third recording layer L3 almost simultaneously, resulting in quick playback from the optical disk 15. Further, the optical disk device 20 may perform recording and playback processing almost simultaneously. For example, while the optical disk device 20 records information to the first recording layer L1, the optical disk device 20 may play back information from the second recording layer L2.

In the optical pickup device 23 according to this exemplary embodiment, the three light sources LD1, LD2, and LD3, the collimating lens 52, the plane hologram element PH1, and the three volume hologram elements VH1, VH2, and VH3 may be contained and unitized in a common body, resulting in the light source device 23A having a compact size. Further, the condensing lens 58, the half prisms 76A and 76B, the pinhole plates 75A, 75B, and 75C, and the optical receivers PD1, PD2, and PD3 may be contained and unitized in a common body.

When solid laser, such as ruby laser and YAG (yttrium-aluminum-garnet) laser, other than semiconductor laser and gas laser, such as He-Ne laser, Ar laser, excimer laser, and $CO_2$ laser, is used, wavelength fluctuation does not occur but the light source device 23A may not have a compact size.

To reduce light amount loss caused by addition of the plane hologram element PH1, the plane hologram element PH1 may preferably have a blazed grating shape in cross section as illustrated in FIG. 16, for example. The blazed grating may be designed to add a primary light beam only, and thereby may lead an incident light beam to each of the volume hologram elements VH1, VH2, and VH3 at a high diffraction efficiency. However, the blazed grating may not constantly provide a high diffraction efficiency. For example, when a grating pitch $\lambda$ divided by a wavelength $\lambda$ is not smaller than 7 (i.e., $\Lambda/\lambda \geq 7$), the blazed grating may provide a high diffraction efficiency. When a grating pitch $\Lambda$ divided by a wavelength $\lambda$ is not greater than 4 (i.e., $\Lambda/\lambda \leq 4$), the blazed grating may not provide a high diffraction efficiency. According to this exemplary embodiment, a wavelength $\lambda$ is 650 nm. Therefore, when a grating pitch $\lambda$ is not smaller than 4.55 $\mu$m, the blazed grating may provide a high diffraction efficiency. According to this exemplary embodiment, the hologram pitch of the plane hologram element PH1 is twice as great as the hologram pitch of the volume hologram element VH2. In this case, the hologram pitch of the volume hologram element VH2 is not smaller than 2.275 $\mu$m.

According to this exemplary embodiment, the volume hologram element VH2 is disposed with respect to the volume hologram element VH1 in the positive side of the X-axis. The volume hologram element VH3 is disposed with respect to the volume hologram element VH2 in the positive side of the X-axis. However, the positions of the volume hologram elements VH1, VH2, and VH3 are not limited to the above.

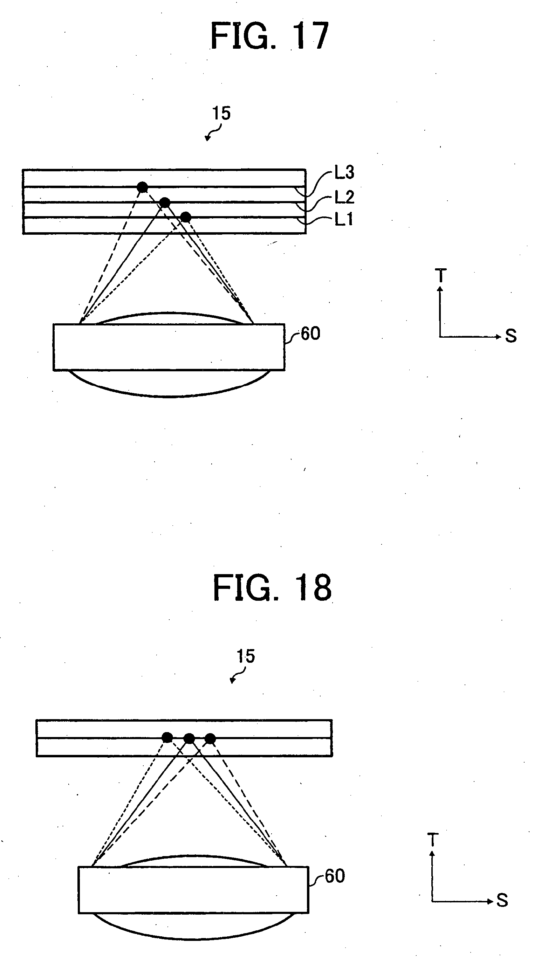

In an example outside the scope of the invention, the volume hologram elements VH1, VH2, and VH3 may be configured to output light beams having luminous exitances and exit angles different from each other, so that light spots may be formed at positions having distances from a rotation center of the optical disk 15 different from each other as illustrated in FIG. 17, for example. In this case, a plurality of return light beams returned from the first recording layer L1, the second recording layer L2, and the third recording layer L3 enter the optical detection device 23B at angles having greater differences from each other than in the above-described exemplary embodiment. Thus, the return light beams may be easily separated from each other, and crosstalk among the first recording layer L1, the second recording layer L2, and the third recording layer L3 may be further reduced.

When light spots formed in the first recording layer L1 and the third recording layer L3 deviate from the optical axis of the objective lens 60, the volume hologram elements VH1 and VH3 may correct coma aberration caused by the deviation.

The volume hologram elements VH1, VH2, and VH3 may be configured to output light beams at exit angles different from each other, respectively, to form three light spots in a common recording layer of the optical disk 15, as illustrated in FIG. 18. Recording and playback may be performed at the three spots simultaneously, resulting in high-speed recording and playback.

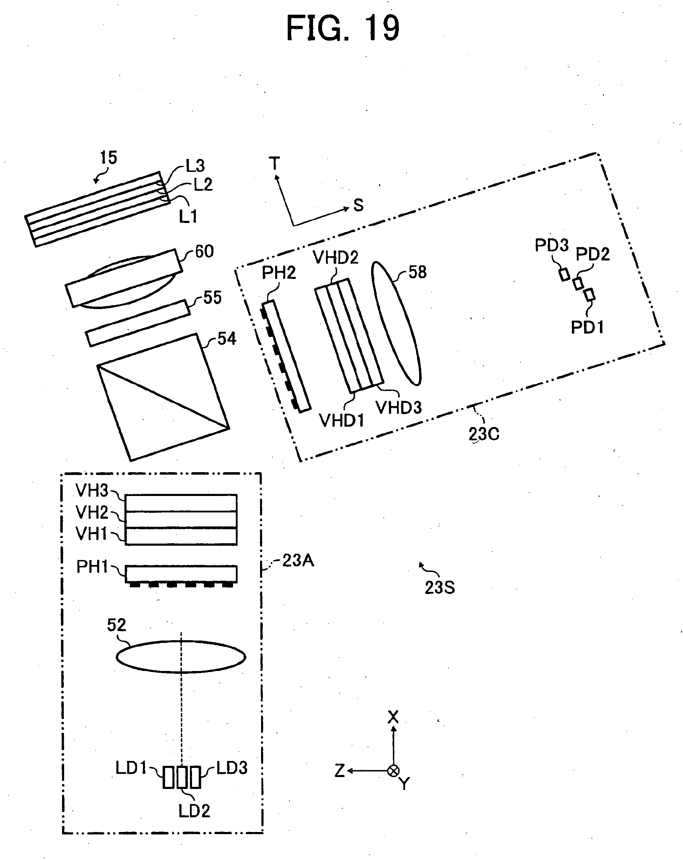

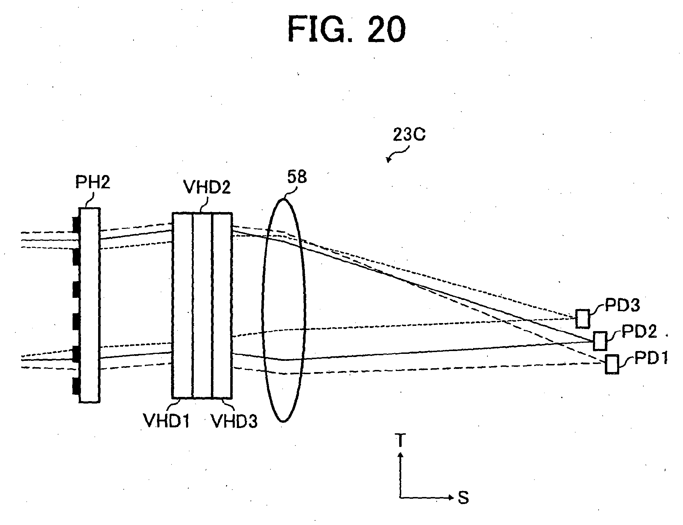

Referring to FIGS. 19 and 20, the following describes an optical pickup device 23S according to another exemplary embodiment. As illustrated in FIG. 19, the optical pickup device 23S includes an optical detection device 23C instead of the optical detection device 23B (depicted in FIG. 3). The optical detection device 23C includes a plane hologram element PH2, volume hologram elements VHD1, VHD2, and VHD3, the condensing lens 58, and the optical receivers PD1, PD2, and PD3. The other elements of the optical pickup device 23S are common to the optical pickup device 23 (depicted in FIG. 3).

The plane hologram element PH2 is disposed with respect to the polarizing beam splitter 54 in the positive side of the S-axis, and diffracts return light beams branched by the polarizing beam splitter 54. A return light beam contained in the return light beams branched by the polarizing beam splitter 54 and returned from the second recording layer L2 enters the plane hologram element PH2 at an incident angle of 0 degrees. A hologram pitch of the plane hologram element PH2 is twice as great as a hologram pitch of the volume hologram element VHD2.

The plane hologram element PH2 diffracts the return light beams. The diffracted return light beams include a first reflection beam, a second reflection beam, and a third reflection beam. The first, second, and third reflection beams denote diffracted return light beams returned from the first recording layer L1, the second recording layer L2, and the third recording layer L3, respectively.

The volume hologram element VHD1 is disposed with respect to the plane hologram element PH2 in the positive side of the S-axis, and diffracts the first reflection beam. The second and third reflection beams are not diffracted by the volume hologram element VHD1 and pass through the volume hologram element VHD1. The volume hologram element VHD2 is disposed with respect to the volume hologram element VHD1 in the positive side of the S-axis, and diffracts the second reflection beam. The third reflection beam and the first reflection beam diffracted by the volume hologram element VHD1 are not diffracted by the volume hologram element VHD2 and pass through the volume hologram element VHD2. The volume hologram element VHD3 is disposed with respect to the volume hologram element VHD2 in the positive side of the S-axis, and diffracts the third reflection beam. The first reflection beam diffracted by the volume hologram element VHD1 and the second reflection beam diffracted by the volume hologram element VHD2 are not diffracted by the volume hologram element VHD3 and pass through the volume hologram element VHD3.

In the light source device 23A (depicted in FIG. 19) according to this exemplary embodiment, like the light source device 23A depicted in FIG. 3, fluctuation of diffraction angle of the plane hologram element PH2 is compensated with fluctuation of Bragg angle of each of the volume hologram elements VHD1, VHD2, and VHD3. Thus, each of the volume hologram'elements VHD1, VHD2, and VHD3 may maintain a high diffraction efficiency.

Like the volume hologram elements VH1, VH2, and VH3 of the light source device 23A, each of the volume hologram elements VHD1, VHD2, and VHD3 of the optical detection device 23C may include photopolymer, thermoplastic, or nanoglass.

The condensing lens 58 is disposed with respect to the volume hologram element VHD3 in the positive side of the S-axis, and gathers the first, second, and third reflection beams diffracted by the volume hologram elements VHD1, VHD2, and VHD3, respectively.

A focal length of the condensing lens 58 may be set more flexibly than a focal length of the collimating lens 52. Accordingly, each of the volume hologram elements VHD1, VHD2, and VHD3 may have flexible specifications. For example, hologram pitch, thickness, and refraction index of each of the volume hologram elements VHD1, VHD2, and VHD3 may be easily optimized to provide an improved angle selectivity and an increased diffraction efficiency.

The optical receiver PD1 is disposed at a gathering position of the condensing lens 58 for gathering the first reflection beam, and receives the first reflection beam. Therefore, the optical receiver PD1 mainly receives a return light beam returned from the first recording layer L1. The optical receiver PD2 is disposed at a gathering position of the condensing lens 58 for gathering the second reflection beam, and receives the second reflection beam. Therefore, the optical receiver PD2 mainly receives a return light beam returned from the second recording layer L2. The optical receiver PD3 is disposed at a gathering position of the condensing lens 58 for gathering the third reflection beam, and receives the third reflection beam. Therefore, the optical receiver PD3 mainly receives a return light beam returned from the third recording layer L3. Like the optical pickup device 23 depicted in FIG. 3, the optical pickup device 23S may perform recording and playback processing.

As described above, the optical pickup device 23S according to this exemplary embodiment includes the light source device 23A including the three light sources LD1, LD2, and LD3, the plane hologram element PH1, and the three volume hologram elements VH1, VH2, and VH3. Therefore, the optical pickup device 23S may provide effects provided by the optical pickup device 23 (depicted in FIG. 3).

The optical pickup device 23S further includes the optical detection device 23C including the plane hologram element PH2 and the three volume hologram elements VHD1, VHD2, and VHD3. Therefore, even when wavelength fluctuation occurs in the return light beams, the optical receivers PD1, PD2, and PD3 may stably output signals having a high S/N (signal to noise) ratio.

The optical detection device 23C does not include pinhole plates (e.g., the pinhole plates 75A, 75B, and 75C depicted in FIG. 3). Therefore, even when gaps between a plurality of recording layers (e.g., the first recording layer L1, the second recording layer L2, and the third recording layer L3) are small, the optical detection device 23C may be assembled and adjusted more easily than the optical detection device 23B (depicted in FIG. 3).

According to this exemplary embodiment, the optical disk device 20 (depicted in FIG. 2) includes the optical pickup device 23S capable of maintaining stable performance even when wavelength fluctuation occurs, providing effects similar to the effects provided by the optical pickup device 23 (depicted in FIG. 3).

To suppress light amount loss, the plane hologram elements PH1 and PH2 may preferably have a blazed grating shape in cross section. In this case, a grating pitch $\Lambda$ divided by a wavelength $\lambda$ is not smaller than 7 (i.e., $\Lambda/\lambda \geq 7$).

As illustrated in FIGS. 3 and 19, according to the above-described exemplary embodiments, the optical disk 15 includes three recording layers (i.e., the first recording layer L1, the second recording layer L2, and the third recording layer L3). However, the optical disk 15 may includes one layer, two layers, or more than three layers. The optical pickup devices 23 and 23S may also record and play back information to and from an optical disk to which information is recorded in a single recording layer in three dimensions. Further, the optical pickup devices 23 and 23S may record and play back information to and from a rewritable optical disk in which information recorded in a plurality of recording layers may be erased almost simultaneously, providing quick erasing.

In the optical pickup device 23S according to this exemplary embodiment, the three light sources LD1, LD2, and LD3, the collimating lens 52, the plane hologram element PH1, and the three volume hologram elements VH1, VH2, and VH3 may be contained and unitized in a common body, resulting in the light source device 23A having a compact size. Further, the plane hologram element PH2, the volume hologram elements VHD1, VHD2, and VHD3, the condensing lens 58, and the optical receivers PD1, PD2, and PD3 may be contained and unitized in a common body.

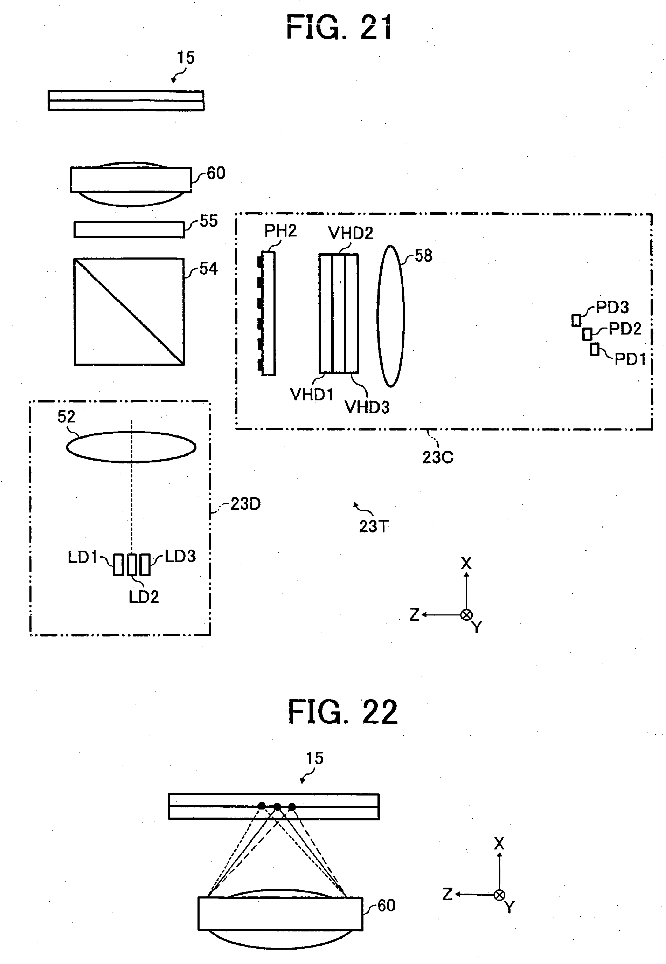

Referring to FIGS. 21 and 22, the following describes an optical pickup device 23T according to yet another exemplary embodiment. As illustrated in FIG. 21, the optical pickup device 23T includes a light source device 23D instead of the light source device 23A (depicted in FIG. 19). The light source device 23D includes the light sources LD1, LD2, and LD3 and the collimating lens 52, and does not include the plane hologram element PH1 and the volume hologram elements VH1, VH2, and VH3 included in the light source device 23A. The other elements of the optical pickup device 23T are common to the optical pickup device 23S (depicted in FIG. 19).

As illustrated in FIG. 22, for example, the optical pickup device 23T forms three light spots in a common recording layer of the optical disk 15.

The optical pickup device 23T includes the optical detection device 23C including the plane hologram element PH2 and the three volume hologram elements VHD1, VHD2, and VHD3. Therefore, even when wavelength fluctuation occurs in return light beams, the optical receivers PD1, PD2, and PD3 may stably output signals having a high S/N ratio. Namely, the optical pickup device 23T may maintain stable performance even when wavelength fluctuation occurs.

In the optical pickup device 23T according to this exemplary embodiment, the three light sources LD1, LD2, and LD3 and the collimating lens 52 may be contained and unitized in a common body. Further, the plane hologram element PH2, the volume hologram elements VHD1, VHD2, and VHD3, the condensing lens 58, and the optical receivers PD1, PD2, and PD3 may be contained and unitized in a common body.

Each of the optical pickup devices 23 (depicted in FIG. 3), 23S (depicted in FIG. 19), and 23T (depicted in FIG. 21) includes three light sources LD1, LD2, and LD3. However, each of the optical pickup devices 23, 23S, and 23T may include two or more than three light sources. Namely, a plurality of volume hologram elements may be provided to correspond to a plurality of light sources. According to the above-described exemplary embodiments, the volume hologram elements VH1, VH2, and VH3 (depicted in FIGS. 3 and 19) and the volume hologram elements VHD1, VHD2, and VHD3 (depicted in FIGS. 19 and 21) are transmission type volume hologram elements. However, the volume hologram elements VH1, VH2, and VH3 and the volume hologram elements VHD1, VHD2, and VHD3 may be reflection type volume hologram elements.

According to the above-described exemplary embodiments, the optical disk device 20 (depicted in FIG. 2) is an optical disk device capable of recording and playback of information. However, the optical disk device 20 may be an optical disk device capable of at least playback among recording, playback, and erasing of information.

As illustrated in FIGS. 3 and 19, a light source unit (e.g., the light source device 23A) outputs a plurality of light beams, and includes a plurality of light sources (e.g., the light sources LD1, LD2, and LD3), a plane hologram element (e.g., the plane hologram element PH1), and a plurality of volume hologram elements (e.g., the volume hologram elements VH1, VH2, and VH3). The plurality of light sources emits a plurality of light beams. The plane hologram element is provided on optical paths of the plurality of light beams, and diffracts the plurality of light beams. The plurality of volume hologram elements corresponds to the plurality of light sources, respectively, and is provided on the optical paths of the plurality of light beams traveling from the plurality of light sources to the plurality of volume hologram elements via the plane hologram element.

Even when wavelength fluctuation occurs in at least one of the plurality of light beams emitted by the plurality of light sources, the plane hologram element and the volume hologram elements corresponding the light sources may reduce effects of wavelength fluctuation. Thus, the light source unit may stably output the plurality of light beams.

As illustrated in FIGS. 19 and 21, an optical detection unit (e.g., the optical detection device 23C) detects a plurality of light beams entering the optical detection unit, and includes a plane hologram element (e.g., the plane hologram element PH2), a plurality of volume hologram elements (e.g., the volume hologram elements VHD1, VHD2, and VHD3), and a plurality of optical detectors (e.g., the optical receivers PD1, PD2, and PD3). The plane hologram element diffracts the plurality of light beams. The plurality of volume hologram elements corresponds to the plurality of light beams, respectively, and is provided on optical paths of the plurality of light beams traveling to the plurality of volume hologram elements via the plane hologram element. The plurality of optical detectors corresponds to the plurality of the volume hologram elements, respectively, and receives the light beams traveling from the corresponding volume hologram elements, respectively.

Even when wavelength fluctuation occurs in at least one of the plurality of light beams entering the optical detection unit, the plane hologram element and the volume hologram elements corresponding the light beams may reduce effects of wavelength fluctuation. Thus, the optical detection unit may detect the plurality of light beams individually with an increased precision.

As illustrated in FIGS. 3 and 19, a first optical head emits light beams toward an optical recording medium (e.g., the optical disk 15) and receives return light beams returned from the optical recording medium. The first optical head includes the light source unit, an optical system (e.g., the polarizing beam splitter 54, the $\lambda/4$ plate 55, and the objective lens 60), and optical detectors (e.g., the optical receivers PD1, PD2, and PD3). The optical system leads a plurality of light beams emitted by the light source unit to the optical recording medium, and leads return light beams returned from the optical recording medium to predetermined positions. The optical detectors are disposed at the predetermined positions, respectively, and receive the return light beams returned from the optical recording medium.

As illustrated in FIGS. 19 and 21, a second optical head emits light beams toward an optical recording medium (e.g., the optical disk 15) and receives return light beams returned from the optical recording medium. The second optical head includes the plurality of light sources, the optical system, and the optical detection unit. The optical system leads a plurality of light beams emitted by the plurality of light sources to the optical recording medium, and leads return light beams returned from the optical recording medium to a predetermined position. The optical detection unit is disposed at the predetermined position.

As illustrated in FIG. 19, a third optical head emits light beams toward an optical recording medium (e.g., the optical disk 15) and receives return light beams returned from the optical recording medium. The third optical head includes the light source unit, the optical system, and the optical detection unit. The optical system leads a plurality of light beams emitted by the light source unit to the optical recording medium, and leads return light beams returned from the optical recording medium to a predetermined position. The optical detection unit is disposed at the predetermined position.

The first, second, and third optical heads include at least one of the light source unit and the optical detection unit. As a result, even when wavelength fluctuation occurs, the first, second, and third optical heads may maintain stable performance.

As illustrated in FIG. 2, an optical driver (e.g., the optical disk device 20) may perform at least playback among recording, playback, and erasing of information for an optical recording medium (e.g., the optical disk 15). The optical driver includes an optical head (e.g., the first, second, or third optical head) and a processor (e.g., the playback signal processing circuit 28). The processor plays back information by using an output signal output by the optical head. Since the optical driver includes the optical head, the optical driver may simultaneously access a plurality of recording positions of the optical recording medium.

As illustrated in FIG. 1, an information processing apparatus (e.g., the information processing apparatus 10) includes the optical driver and a controller (e.g., the main controller 92). The controller controls the optical driver. Since the information processing apparatus includes the optical driver, the information processing apparatus may stably access the optical recording medium at an increased speed.

As described above, the light source unit may stably output a plurality of light beams even when wavelength fluctuation occurs. The optical detection unit may detect the plurality of light beams individually with an increased precision even when wavelength fluctuation occurs. The optical head may maintain stable performance even when wavelength fluctuation occurs. The optical driver may access a plurality of recording positions of the optical recording medium simultaneously. The information processing apparatus may stably access the optical recording medium at an increased speed.

Although the present invention has been described above with reference to specific embodiments, the present invention is not limited to the details of the embodiments described above and various modifications and improvements are possible without departing from the scope of the invention, which is defined by the appended claims. It is therefore to be understood that, within the scope of the appended claims, the present invention may be practiced otherwise than as specifically described herein. For example, elements and/or features of different illustrative embodiments may be combined with each other and/or substituted for each other within the scope of the present invention and appended claims.

The present application is based on and claims priority from Japanese Patent Application No. 2006-344391 filed on December 21, 2006 in the Japan Patent Office.

**Claims**

1. A light source unit (23A) for outputting a plurality of light beams, the light source unit comprising:

     a plurality of light sources (LD1; LD2; LD3) in a common plane (Z, Y) configured to emit the plurality of light beams;
     a collimating lens (52) configured to shape the light beams emitted by each of the light sources into beams substantially parallel to each other;
     a plane hologram element (PH1) configured to diffract each of the substantially parallel beams output from the collimating lens (52), and arranged such that a light beam emitted by one (LD2) of the plurality of light sources enters the plane hologram element at an incident angle of 0°;
     and a plurality of volume hologram elements (VH1, VH2, VH3) each corresponding to a respective one of the light sources and configured to diffract the light beam emitted by that light source and not to diffract the light beams emitted by the other light sources, and configured to output light beams having the same exit angle;
     wherein the hologram pitch ($\Lambda_p$) of the plane hologram element (PH1) is twice the hologram pitch ($\Lambda_2$) of the volume hologram element (VH2) corresponding to the said one (LD2) of the light sources, such that the incident angle at which the light beam emitted by said one (LD2) of the light sources enters the volume hologram element (VH2) satisfies the Bragg condition irrespective of the wavelength of that light source;
     and wherein the hologram pitch ($\Lambda 1, \Lambda 3$) of the volume hologram element (VH1, VH3) of each respective other light source (LD1, LD3) is such, in relation to the hologram pitch ($\Lambda_p$) of the plane hologram element (PH1), that the incident angle at which the light beam emitted from said other light source (LD1, LD3) enters the corresponding volume hologram element (VH1, VH3) satisfies the Bragg condition with respect to those volume hologram elements.

2. The light source unit according to claims 1, wherein at least one of the plurality of light sources includes a semiconductor laser.

3. The light source unit according to claim 1 or claim 2,
   wherein the plane hologram element (PH1) has a blazed grating shape in cross section.

4. The light source unit according to any one of claims 1 to 3, wherein the plurality of volume hologram elements includes one of photopolymer, thermoplastic, and nanoglass.

5. An optical head (23A, 54, 55, 60, PD1, PD2, PD3) for emitting light beams toward an optical recording medium and receiving return light beams from the optical recording medium, the optical head comprising a light source unit (23A) according to any one of claims 1 to 4;
an optical system (54, 55, 60) configured to lead a plurality of light beams output by the light source unit to an optical recording medium and to lead return light beams returned from the optical recording medium to predetermined positions; and
a plurality of optical detectors (PD1; PD2; PD3) provided at the predetermined positions, respectively, and configured to receive the corresponding return light beams, respectively.

6. The optical head according to claim 5, wherein the optical recording medium includes a plurality of recording positions in a thickness direction, to which the plurality of light beams (LD1, LD2, LD3) correspond, respectively, and wherein the optical system is configured to gather the plurality of light beams to the corresponding recording positions, respectively.

7. The optical head according to claim 6, wherein at least one of the volume hologram elements (VH1, VH2, VH3) of the light source unit changes luminous excitance of the corresponding light beam to compensate for aberration caused by difference of the recording positions relating to the thickness direction.

8. The optical head according to claim 6 or 7, wherein the optical recording medium includes an optical disk, and configured to form light spots at the plurality of recording positions, respectively, the plurality of recording positions having distances from a rotation center of the optical disk different from each other.

9. An optical driver (20) for performing at least playback among recording, playback, and erasing of information to and from an optical recording medium, the optical driver comprising:

an optical head (23A, 54, 55, 60, PD1, PD2, PD3; LD1, LD2, LD3, 54, 55, 60, 23C; 23A, 54, 55, 60, 23C) according to any one of claims 5 to 8; and
a processor (28) configured to play back information in accordance with an output signal output by the optical head.

10. An information processing apparatus (10), comprising:

an optical driver (20) according to claim 9; and
a controller (92) configured to control the optical driver.

**Patentansprüche**

1. Lichtquelleneinheit (23A) zum Ausgeben einer Vielzahl von Lichtstrahlen, wobei die Lichtquelleneinheit umfasst:

eine Vielzahl von Lichtquellen (LD1; LD2; LD3) in einer gemeinsamen Ebene (Z, Y), konfiguriert zum Emittieren der Vielzahl von Lichtstrahlen;
eine Kollimatorlinse (52), konfiguriert, um die von jeder der Lichtquellen emittierten Lichtstrahlen in Strahlen zu formen, die im Wesentlichen parallel zueinander sind;
ein Flächenhologrammelement (PH1), konfiguriert zum Beugen eines jeden der von der Kollimatorlinse (52) ausgegebenen im Wesentlichen parallelen Strahlen, und so angeordnet, dass ein von einer (LD2) der Vielzahl von Lichtquellen emittierter Lichtstrahl mit einem Einfallswinkel von 0° in das Flächenhologrammelement eintritt; und eine Vielzahl von Volumenhologrammelementen (VH1, VH2, VH3), deren jedes einer jeweiligen der Lichtquellen entspricht und dazu konfiguriert ist, den von dieser Lichtquelle emittierten Lichtstrahl zu beugen und die von den anderen Lichtquellen emittierten Lichtstrahlen nicht zu beugen, und dazu konfiguriert ist, Lichtstrahlen auszugeben, die denselben Austrittswinkel haben;
worin der Hologrammabstand (Ap) des Flächenhologrammelements (PH1) das Doppelte des Hologrammabstands ($\Lambda_2$) des Volumenhologrammelements (VH2) ist, das dem einen (LD2) der Lichtquellen entspricht, sodass der Einfallswinkel, mit dem der von der einen (LD2) der Lichtquellen emittierte Lichtstrahl in das Volumenhologrammelement (VH2) eintritt, ungeachtet der Wellenlänge dieser Lichtquelle die Braggsche Bedingung erfüllt;

und worin der Hologrammabstand ($\Lambda_1$, $\Lambda_3$) des Volumenhologrammelements (VH1, VH3) einer jeden jeweiligen anderen Lichtquelle (LD1, LD3) bezüglich des Hologrammabstands (Ap) des Flächenhologrammelements (PH1) die Eigenschaft hat, dass der Einfallswinkel, mit dem der von der anderen Lichtquelle (LD1, LD3) emittierte Lichtstrahl in das entsprechende Volumenhologrammelement (VH1, VH3) eintritt, bezüglich dieser Volumenhologrammelemente die Braggsche Bedingung erfüllt.

2. Lichtquelleneinheit nach Anspruch 1, worin mindestens eine der Vielzahl von Lichtquellen einen Halbleiterlaser einschließt.

3. Lichtquelleneinheit nach Anspruch 1 oder Anspruch 2, worin das Flächenhologrammelement (PH1) im Querschnitt eine Blaze-Gitter-Form hat.

4. Lichtquelleneinheit nach einem der Ansprüche 1 bis 3, worin die Vielzahl von Volumenhologrammelementen eins von Folgenden einschließt: Fotopolymer, Thermoplast und Nano-Glas.

5. Optischer Kopf (23A, 54, 55, 60, PD1, PD2, PD3) zum Emittieren von Lichtstrahlen an ein optisches Aufzeichnungsmedium und zum Empfangen von Rücklichtstrahlen vom optischen Aufzeichnungsmedium, wobei der optische Kopf eine Lichtquelleneinheit (23A) nach einem der Ansprüche 1 bis 4 umfasst;
ein optisches System (54, 55, 60), konfiguriert zum Führen einer Vielzahl von durch die Lichtquellquelleneinheit ausgegebenen Lichtstrahlen an ein optisches Aufzeichnungsmedium und zum Führen von vom optischen Aufzeichnungsmedium zurückgeführten Rücklichtstrahlen an vorgegebene Positionen; und
eine Vielzahl von optischen Detektoren (PD1; PD2; PD3), die an den jeweiligen vorgegebenen Positionen bereitgestellt werden und dazu konfiguriert sind, die jeweiligen entsprechenden Rücklichtstrahlen zu empfangen.

6. Optischer Kopf nach Anspruch 5, worin das optische Aufzeichnungsmedium in einer Dickenrichtung eine Vielzahl von Aufzeichnungspositionen einschließt, denen die Vielzahl von jeweiligen Lichtstrahlen (LD1, LD2, LD3) entspricht, und worin das optische System dazu konfiguriert ist, die Vielzahl von Lichtstrahlen an den entsprechenden jeweiligen Aufzeichnungspositionen zu sammeln.

7. Optischer Kopf nach Anspruch 6, worin mindestens eines der Volumenhologrammelemente (VH1, VH2, VH3) der Lichtquelleneinheit die Lichterregung des entsprechenden Lichtstrahls ändert, um für Aberration zu kompensieren, die durch Verschiedenheit der Aufzeichnungspositionen bezüglich der Dickenrichtung verursacht wird.

8. Optischer Kopf nach Anspruch 6 oder 7, worin das optische Aufzeichnungsmedium eine optische Platte einschließt und dazu konfiguriert ist, an der Vielzahl von jeweiligen Aufzeichnungspositionen Lichtpunkte zu formen, wobei die Vielzahl von Aufzeichnungspositionen Entfernungen von einem Rotationszentrum der optischen Platte haben, die voneinander verschieden sind.

9. Optischer Treiber (20) zum Ausführen von mindestens Playback aus Aufzeichnung, Playback und Löschen von Information an bzw. von einem optischen Auszeichnungsmedium, wobei der optische Treiber umfasst:

einen optischen Kopf (23A, 54, 55, 60, PD1, PD2, PD3; LD1, LD2, LD3, 54, 55, 60, 23C; 23A, 54, 55, 60, 23C) nach einem der Ansprüche 5 bis 8; und
einen Prozessor (28), konfiguriert zum Playback von Information gemäß einem Ausgabesignal, das durch den optischen Kopf ausgegeben wird.

10. Informationsverarbeitungsvorrichtung (10), Folgendes umfassend:

einen optischen Treiber (20) nach Anspruch 9; und
einen Controller (92) konfiguriert zum Steuern des optischen Treibers.

**Revendications**

1. Unité de source de lumière (23A) pour délivrer en sortie une pluralité de faisceaux de lumière, l'unité de source de lumière comprenant :

une pluralité de sources de lumière (LD1 ; LD2 ; LD3) dans un plan commun (Z, Y) configurées pour émettre la pluralité de faisceaux de lumière ;

une lentille convergente (52) configurée pour mettre en forme les faisceaux de lumière émis par chacune des sources de lumière en faisceaux sensiblement parallèles les uns aux autres ;

un élément d'hologramme plan (PH1) configuré pour diffracter chacun des faisceaux sensiblement parallèles délivrés en sortie par la lentille convergente (52), et disposé de manière à ce qu'un faisceau de lumière émis par une source (LD2) de la pluralité de sources de lumière pénètre dans l'élément d'hologramme plan suivant un angle d'incidence de 0° ;

et une pluralité d'éléments d'hologramme en volume (VH1, VH2, VH3) correspondant chacun à une source respective des sources de lumière et configuré pour diffracter le faisceau de lumière émis par cette source de lumière et pour ne pas diffracter les faisceaux de lumière émis par les autres sources de lumière, et configuré pour délivrer en sortie des faisceaux de lumière ayant le même angle de sortie ;

où le pas d'hologramme (Ap) de l'élément d'hologramme plan (PH1) est le double du pas d'hologramme ($\Lambda_2$) de l'élément d'hologramme en volume (VH2) correspondant à ladite une source (LD2) des sources de lumière, de manière à ce que l'angle d'incidence suivant lequel le faisceau de lumière émis par ladite une source de lumière (LD2) de la pluralité des sources de lumière pénètre dans l'élément d'hologramme en volume (VH2) satisfasse la condition de Bragg indépendamment de la longueur d'onde de cette source de lumière ;

et où le pas d'hologramme ($\Lambda_1$, $\Lambda_3$) de l'élément d'hologramme en volume (VH1, VH3) de chaque autre source de lumière respective (LD1, LD3) est tel que, en relation avec le pas d'hologramme (Ap) de l'élément d'hologramme plan (PH1), l'angle d'incidence suivant lequel le faisceau de lumière émis par ladite autre source de lumière (LD1, LD3) pénètre dans l'élément d'hologramme en volume correspondant (VH1, VH3) satisfasse la condition de Bragg relativement à ces éléments d'hologramme en volume.

2. Unité de source de lumière selon la revendication 1, dans laquelle au moins une de la pluralité de sources de lumière comprend un laser à semi-conducteur.

3. Unité de source de lumière selon la revendication 1 ou la revendication 2, dans laquelle l'élément d'hologramme plan (PH1) présente une forme de réseau blazé en coupe transversale.

4. Unité de source de lumière selon l'une quelconque des revendications 1 à 3, dans laquelle la pluralité d'éléments d'hologramme en volume comprennent un élément parmi un photopolymère, un thermoplastique et un nano verre.

5. Tête optique (23A, 54, 55, 60, PD1, PD2, PD3) pour émettre des faisceaux de lumière vers un support d'enregistrement optique et recevoir des faisceaux de lumière de retour du support d'enregistrement optique, la tête optique comprenant une unité de source de lumière (23A) selon l'une quelconque des revendications 1 à 4 ;

un système optique (54, 55, 60) configuré pour mener une pluralité de faisceaux de lumière délivrés en sortie par l'unité de source de lumière vers un support d'enregistrement optique et pour mener des faisceaux de lumière de retour renvoyés par le support d'enregistrement optique vers des positions prédéterminées ; et

une pluralité de détecteurs optiques (PD1 ; PD2 ; PD3) pourvus aux positions prédéterminées, respectivement, et configurés pour recevoir les faisceaux de lumière retournés correspondants, respectivement.

6. Tête optique selon la revendication 5, dans laquelle le support d'enregistrement optique comprend une pluralité de positions d'enregistrement dans une direction d'épaisseur, auxquelles la pluralité de faisceaux de lumière (LD1, LD2, LD3) correspond, respectivement, et dans laquelle le système optique est configuré pour rassembler la pluralité de faisceaux de lumière vers les positions d'enregistrement correspondantes, respectivement.

7. Tête optique selon la revendication 6, dans laquelle au moins un des éléments d'hologramme en volume (VH1, VH2, VH3) de l'unité de source de lumière change l'excitation lumineuse du faisceau de lumière correspondant pour compenser l'aberration causée par la différence des positions d'enregistrement par rapport à la direction d'épaisseur.

8. Tête optique selon la revendication 6 ou la revendication 7, dans laquelle le support d'enregistrement optique comprend un disque optique, et est configurée pour former des spots lumineux au niveau de la pluralité de positions d'enregistrement, respectivement, la pluralité de positions d'enregistrement ayant des distances par rapport à un centre de rotation du disque optique différentes les unes des autres.

9. Lecteur optique (20) pour effectuer au moins la lecture parmi l'enregistrement, la lecture et l'effacement d'informations vers et depuis un support d'enregistrement optique, le lecteur optique comprenant :

une tête optique (23A, 54, 55, 60, PD1, PD2, PD3 ; LD1, LD2, LD3, 54, 55, 60, 23C ; 23A, 54, 55, 60, 23C) selon l'une quelconque des revendications 5 à 8 ; et

un processeur (28) configuré pour lire des informations conformément à un signal de sortie délivré en sortie par la tête optique.

10. Appareil de traitement d'informations (10), comprenant :

un lecteur optique (20) selon la revendication 9 ; et
un contrôleur (92) configuré pour contrôler le lecteur optique.

# FIG. 1

EP 1 936 619 B1

# FIG. 2

EP 1 936 619 B1

# FIG. 3

# FIG. 4A

23A

52

LD1 — LD3
LD2

X
Z — ⊗ Y

# FIG. 4B

23A

52

LD1 — LD3
LD2

X
Z — ⊗ Y

# FIG. 4C

23A

52

LD1 — LD3
LD2

X
Z — ⊗ Y

# FIG. 5

23A

VH3

VH2

VH1

PH1

B1

X

Z⊗Y

# FIG. 6

23A

VH3

VH2

VH1

PH1

B2

X

Z⊗Y

# FIG. 7

23A

VH3

VH2

VH1

PH1

X

B3

Z ⊗ Y

# FIG. 8

15

L3
L2
L1

60

T

S

# FIG. 9

# FIG. 10

```
        ┌─────────────┐
        │    START    │
        └──────┬──────┘
               │
               ▼
    ┌────────────────────┐
    │      ROTATE        ├── S401
    │   SPINDLE MOTOR    │
    └─────────┬──────────┘
               │
               ▼
    ┌────────────────────┐
    │ DIVIDE RECORD DATA ├── S402
    └─────────┬──────────┘
               │
               ▼
    ┌────────────────────┐
    │  SPECIFY TARGET    ├── S403
    │     POSITION       │
    └─────────┬──────────┘
               │
               ▼
    ┌────────────────────┐
    │  ALLOW RECORDING   ├── S404
    └─────────┬──────────┘
               │
               ▼          S405
           ╱───────────╲        NO
         ╱   RECORDING   ╲─────────►
         ╲   FINISHED?   ╱
           ╲───────────╱
               │ YES
               ▼
        ┌─────────────┐
        │     END     │
        └─────────────┘
```

# FIG. 11

```
                    ┌─────────────┐
                    │    START    │
                    └──────┬──────┘
                           │
                           ▼
              ┌──────────────────────┐
              │   ROTATE SPINDLE     │  ─ S501
              │       MOTOR          │
              └──────────┬───────────┘
                         │
                         ▼
              ┌──────────────────────┐
              │   SPECIFY TARGET     │  ─ S502
              │      POSITION        │
              └──────────┬───────────┘
                         │
                         ▼
              ┌──────────────────────┐
              │   ALLOW PLAYBACK     │  ─ S503
              └──────────┬───────────┘
                         │          ◄──────────┐
                         ▼       S504           │
                      ╱────────────╲            │
                     ╱   PLAYBACK   ╲    NO      │
                     ╲   FINISHED?   ╱───────────┘
                      ╲────────────╱
                           │ YES
                           ▼
              ┌──────────────────────┐
              │      COMBINE         │  ─ S505
              │   PLAYBACK DATA      │
              └──────────┬───────────┘
                         │
                         ▼
                    ┌─────────┐
                    │   END   │
                    └─────────┘
```

# FIG. 12

# FIG. 13

# FIG. 14

# FIG. 15

# FIG. 16

# FIG. 17

15

L3
L2
L1

T
S

60

# FIG. 18

15

T
S

60

# FIG. 19

# FIG. 20

# FIG. 21

# FIG. 22

**EP 1 936 619 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20060164952 A
- WO 2006092745 A
- US 6043911 A
- US 2002009040 A
- JP 2006344391 A